# EUROPÄISCHE PATENTSCHRIFT

(11) **EP 2 307 182 B1**
(45) Veröffentlichungstag und Bekanntmachung des Hinweises auf die Patenterteilung: **08.08.2012**
(21) Anmeldenummer: 09765582.3
(22) Anmeldetag: 12.06.2009
(51) Int. Cl.: B29C 47/40, B29C 47/60

(54) **SCHNECKENELEMENTE ZUR EXTRUSION PLASTISCHER MASSEN, VERWENDUNG DER SCHNECKENELEMENTE UND EIN VERFAHREN ZUR EXTRUSION**
SCREW ELEMENTS FOR EXTRUDING PLASTIC MATERIALS, USE OF SAID SCREW ELEMENTS, AND EXTRUSION METHOD
ÉLÉMENTS DE VIS SANS FIN POUR L'EXTRUSION DE MATIÈRES PLASTIQUES, UTILISATION DES ÉLÉMENTS DE VIS SANS FIN ET PROCÉDÉ D'EXTRUSION

(30) Priorität: 20.06.2008 DE 102008029304
(43) Veröffentlichungstag der Anmeldung: 13.04.2011
(73) Patentinhaber: Bayer Technology Services GmbH, 51368 Leverkusen (DE)
(72) Erfinder: BIERDEL, Michael, 51373 Leverkusen (DE); KÖNIG, Thomas, 51375 Leverkusen (DE); LIESENFELDER, Ulrich, 51469 Bergisch Gladbach (DE)
(86) Internationale Anmeldenummer: PCT/EP2009/004250
(87) Internationale Veröffentlichungsnummer: WO 2009/153002

(56) Entgegenhaltungen:
- EP-A- 0 160 124
- DE-B- 1 180 718
- DATABASE WPI Week 200466 Thomson Scientific, London, GB; AN 2004-672246 XP002551846 -& JP 2004 262177 A (JAPAN STEEL WORKS LTD) 24. September 2004 (2004-09-24)

## Beschreibung

Die Erfindung betrifft neuartige Schneckenelemente für mehrwellige Schneckenmaschinen mit paarweise gleichsinnig drehenden und paarweise exakt abschabenden Schneckenprofilen, die Verwendung der Schneckenelemente in mehrwelligen Schneckenmaschinen und ein Verfahren zur Extrusion plastischer Massen.

Gleichsinnig drehende Zwei- oder ggf. Mehrwellenmaschinen, deren Rotoren sich gegenseitig exakt abschaben, sind bereits seit langem bekannt. Einen umfassenden Überblick über solche Schneckenextruder gibt die folgende Veröffentlichung [1] = Kohlgrüber: Der gleichläufige Doppelschneckenextruder. Hanser Verlag, München, 2007.

In der Polymerherstellung und Polymerverarbeitung haben Schneckenmaschinen, die auf dem Prinzip exakt abschabender Profile beruhen, eine vielfältige Nutzung erfahren. Dies beruht vor allem darauf, dass Polymerschmelzen an Oberflächen anhaften und unter üblichen Verarbeitungstemperaturen mit der Zeit degradieren, was durch die selbstreinigende Wirkung der exakt abschabenden Schnecken unterbunden wird. Regeln zur Erzeugung exakt abschabender Schneckenprofile sind beispielsweise in der Veröffentlichung [1] auf den Seiten 96 - 109 dargestellt. Hier ist auch beschrieben, dass ein vorgegebenes Schneckenprofil auf der 1. Welle eines Doppelschneckenextruders das Schneckenprofil auf der 2. Welle eines Doppelschneckenextruders bestimmt. Das Schneckenprofil auf der 1. Welle des Doppelschneckenextruders wird daher als das erzeugende Schneckenprofil bezeichnet. Das Schneckenprofil auf der 2. Welle des Doppelschneckenextruders folgt aus dem Schneckenprofil der 1. Welle des Doppelschneckenextruders und wird daher als das erzeugte Schneckenprofil bezeichnet. Bei einem Mehrwellenextruder werden das erzeugende Schneckenprofil und das erzeugte Schneckenprofil auf benachbarten Wellen immer abwechselnd eingesetzt.

Moderne Doppelschneckenextruder verfügen über ein Baukastensystem, bei dem verschiedene Schneckenelemente auf einer Kernwelle aufgezogen werden können. Hiermit kann der Fachmann den Doppelschneckenextruder an die jeweilige Verfahrensaufgabe anpassen. Ein Paar von Schneckenelementen besteht aus einem Schneckelement mit einem erzeugenden Schneckenprofil und einem Schneckenelement mit einem erzeugten Schneckenprofil.

Wie zum Beispiel in [1] auf den Seiten 96 - 109 nachzulesen ist, ist das bekannte, nach dem Haupterfinder benannte Erdmenger-Schneckenprofil durch die Angabe der drei Größen Gangzahl z, Schneckenaußenradius ra und Achsabstand a eindeutig definiert. Die Gangzahl z ist eine ganze Zahl, die größer oder gleich 1 ist. Eine weitere wichtige Kenngröße eines Schneckenprofils ist der Kernradius ri. Eine weitere wichtige Kenngröße eines Schneckenprofils ist die Gangtiefe h.

Die Bereiche eines Schneckenprofils, die gleich dem Schneckenaußenradius sind, werden als Kammbereiche bezeichnet. Der Winkel zwischen dem Anfangs- und dem Endpunkt eines Kammbereichs bezogen auf den Drehpunkt des Schneckenprofils wird als Kammwinkel bezeichnet. Ein Kammbereich, der den Schneckenaußenradius nur in einem Punkt berührt, besitzt den Kammwinkel 0 - Anfangs- und Endpunkt fallen in einem Punkt zusammen. Die Bereiche eines Schneckenprofils, die gleich dem Kernradius sind, werden als Nutbereiche bezeichnet. Der Winkel zwischen dem Anfangs- und dem Endpunkt eines Nutbereichs bezogen auf den Drehpunkt des Schneckenprofils wird als Nutwinkel bezeichnet. Ein Nutbereich, der den Kernradius nur in einem Punkt berührt, besitzt den Nutwinkel 0 - Anfangs- und Endpunkt sind auch hier identisch. Die Bereiche eines Schneckenprofils, die kleiner als der Schneckenaußenradius und größer als der Kernradius sind, werden als Flankenbereiche bezeichnet. Entsprechend wird der Winkel zwischen dem Anfangs- und dem Endpunkt eines Flankenbereichs bezogen auf den Drehpunkt des Schneckenprofils als Flankenwinkel bezeichnet. Der Bereich eines Mehrwellenextruders, in dem sich zwei Gehäusebohrungen durchdringen, wird als Zwickelbereich bezeichnet. Die beiden Schnittpunkte von zwei Gehäusebohrungen werden als Gehäusezwickel bezeichnet.

Der Kammwinkel δ_kw eines z-gängigen Erdmenger-Schneckenprofils berechnet sich zu δ_kw=π/z-2*arccos(0,5*a/ra), wobei π (π≈3,14159) die Kreiszahl ist [1]. Die Summe der Kammwinkel eines Paars von zweigängigen Schneckenelementen mit einem Erdmenger-Schneckenprofil ist damit gleich 2*π-8*arccos(0,5*a/ra).

Ferner werden in [1] der Aufbau, die Funktion und der Betrieb von Zwei- und Mehrwellenextrudern ausführlich erläutert. Ein eigenes Kapitel (Seiten 227 - 248) ist den Schneckenelementen und ihrer Wirkungsweise gewidmet. Hier werden der Aufbau und die Funktion von Förder-, Knet- und Mischelementen detailliert erläutert. Um den Übergang zwischen Schneckenelementen unterschiedlicher Gangzahl zu ermöglichen, werden häufig Unterlegscheiben als Distanzhülse eingesetzt. In Sonderfällen werden sogenannte Übergangselemente eingesetzt, die einen kontinuierlichen Übergang zwischen zwei Schneckenprofilen unterschiedlicher Gangzahl ermöglichen, wobei an jedem Punkt des Übergangs ein sich selbst reinigendes Paar von Schneckenprofilen vorliegt.

Unter einer plastischen Masse wird eine verformbare Masse verstanden. Beispiele für plastische Massen sind Polymerschmelzen, vor allem von Thermoplasten und Elastomeren, Mischungen von

Polymerschmelzen oder Dispersionen von Polymerschmelzen mit Feststoffen, Flüssigkeiten oder Gasen.

Die Extrusion von plastischen Massen spielt insbesondere bei der Herstellung, Aufbereitung und Verarbeitung von Polymeren eine große Rolle. Unter Extrusion wird die Behandlung eines Stoffes oder Stoffgemisches in einem gleichsinnig drehenden Doppelschnecken- oder Mehrwellenextruder, wie er umfassend in [1] beschrieben ist, verstanden.

Bei der Herstellung von Polymeren erfolgt eine Extrusion z.B. zur Entgasung der Polymere (siehe z.B. [1] Seiten 191 bis 212).

Bei der Aufbereitung von Polymeren erfolgt eine Extrusion z.B. zur Einmischung von Zusatzstoffen oder zum Mischen von verschiedenen Polymeren, die sich z.B. in chemischer Zusammensetzung, Molekulargewicht oder Molekülstruktur unterscheiden (siehe z.B. [1] Seiten 59 bis 93). Dieses auch als Compoundierung bezeichnete Verfahren dient der Polymeraufbereitung zur Herstellung der fertigen Kunststoff-Formrnasse (das Compound) unter Einsatz der Kunststoffrohstoffe, die üblicherweise aufgeschmolzen werden, und unter Zugabe und Einmischen von Füll-und/oder Verstärkungsstoffen, Weichmachern, Haftvermittlern, Gleitmitteln, Stabilisatoren, Farben etc. Die Aufbereitung umfasst häufig auch die Entfernung von flüchtigen Bestandteilen wie z.B. Luft und Wasser. Die Aufbereitung kann auch eine chemische Reaktion wie z.B. Pfropfung, Modifikation von funktionellen Gruppen oder Modifikationen des Molekulargewichtes durch gezielten Auf- oder Abbau des Molekulargewichts beinhalten.

Bei der Verarbeitung von Polymeren werden die Polymere bevorzugt in die Form eines Halbzeuges, eines gebrauchsfertigen Produktes oder eines Bauteiles gebracht. Die Verarbeitung kann z.B. durch Spritzgießen, Extrusion, Folienblasen, Folienziehen oder Verspinnen erfolgen. Die Verarbeitung kann auch Mischungen von Polymeren mit Füll- und Zuschlagstoffen und Additiven sowie chemische Modifikationen wie z.B. Vulkanisation umfassen.

Die Behandlung plastischer Massen während einer Extrusion umfasst eine oder mehrere der Verfahrensoperationen Fördern, Aufschmelzen, Dispergieren, Mischen, Entgasen und Druckaufbau.

Wie allgemein bekannt und z.B. in [1] auf den Seiten 169 bis 190 beschrieben, lässt sich Mischen in distributives und dispersives Mischen einteilen. Unter distributivem Mischen wird das gleichmäßige Verteilen von verschiedenen Komponenten in einem betrachteten Volumen verstanden. Distributives Mischen liegt zum Beispiel bei der Vermischung gleichartiger Polymere vor. Beim dispersiven Mischen werden Feststoffteilchen, Flüssigkeitstropfen oder Gasblasen zunächst zerteilt. Für das Zerteilen müssen ausreichend große Scherkräfte aufgebracht werden, um zum Beispiel die Oberflächenspannung an der Grenzfläche zwischen Polymerschmelze und einem Additiv zu überwinden. Unter Mischen wird im Folgenden immer distributives und/oder dispersives Mischen verstanden.

In der Veröffentlichung [1] auf Seite 73ff wird die Schmelzeförderung und der Druckaufbau beschrieben. Die Schmelzeförderzonen in Extruderschnecken dienen dazu, das Produkt von einer Verfahrenszone zur nächsten zu transportieren sowie Füllstoffe einzuziehen. Schmelzeförderzonen sind in der Regel teilgefüllt, wie z.B. beim Transport des Produktes von einer zur nächsten Verfahrenszone, beim Entgasen und in Verweilzeitzonen. Die zum Fördern benötigte Energie wird dissipiert und macht sich nachteilig in einer Temperaturerhöhung der Polymerschmelze bemerkbar. In einer Förderzone sollten daher Schneckenelemente verwendet werden, die möglichst wenig Energie dissipieren. Für die reine Schmelzeförderung sind Gewindeelemente mit Gangsteigungen von einmal dem Extruderinnendurchmesser D üblich [1].

Vor Druckverbrauchern innerhalb des Extruders wie z.B. Rückförderelementen, Mischelementen, rückfördernden oder neutralen Knetblöcken und vor Druckverbrauchern außerhalb des Extruders wie z.B. Düsenplatten, Extrusionswerkzeugen und Schmelzefiltern entsteht innerhalb des Extruders eine Rückstauzone, in der vollgefüllt gefördert wird und in der der Druck zum Überwinden des Druckverbrauchers aufgebaut werden muss. Die Druckaufbauzone eines Extruders, in der der zum Austrag der Schmelze notwendige Druck erzeugt wird, wird als Austragszone bezeichnet. Die in die Polymerschmelze eingebrachte Energie spaltet sich auf in Nutzleistung zum Druckaufbau und zum Fördern der Schmelze und in Dissipationsleistung, die sich nachteilig in einer Temperaturerhöhung der Schmelze bemerkbar macht. In der Druckaufbauzone erfolgt eine starke Rückströmung der Schmelze über die Schneckenkämme und dadurch ein erhöhter Energieeintrag [1]. In einer Druckaufbauzone sollten daher Schneckenelemente verwendet werden, die möglichst wenig Energie dissipieren.

Dem Fachmann ist bekannt, dass im Bereich der Schneckenkämme besonders viel Energie in der Schmelze dissipiert wird, was lokal zu starken Überhitzungen im Produkt führt. Dies ist beispielsweise in [1] auf den Seiten 160ff für ein zweigängiges Förderelement mit dem bekannten Erdmenger-Schneckenprofil dargestellt. Diese lokalen Überhitzungen können zu Schädigungen im Produkt wie z.B. Veränderung in Geruch, Farbe, chemischer Zusammensetzung oder Molekulargewicht oder zur Bildung von Inhomogenitäten im Produkt wie Gelkörpern oder Stippen führen. Vor allem ein großer Kammwinkel ist hierbei schädlich. Weiterhin begrenzt ein hoher Energieeintrag bei vielen Prozessen auch den möglichen Durchsatz des Doppelschneckenextruders und damit die Wirtschaftlichkeit.

Dem Fachmann ist weiterhin bekannt ([1], Seiten 129 bis 146), dass der Wirkungsgrad beim Druckaufbau zweigängiger Förderelemente mit dem bekannten Erdmenger-Schneckenprofil bei etwa 10% liegt. Ein Druckanstieg von 50 bar bei einer Dichte der Schmelze von 1000 kg/m³ und einer Wärmekapazität der Schmelze von 2000 J/kg/K bei besagtem Wirkungsgrad von 10% führt zu einem Temperaturanstieg von 25 K ([1], Seite 120). Diese Erwärmung kann zu Schädigungen im Produkt wie z.B. Veränderung in Geruch, Farbe, chemischer Zusammensetzung oder Molekulargewicht oder zur Bildung von Inhomogenitäten im Produkt wie Gelkörpern oder Stippen führen.

Bei der Extrusion von Polyethylen und Polyethylen-Copolymeren zeigen sich bei zu hoher Temperatur Aufbau von Molekulargewicht, Verzweigung und Vernetzung. Weiterhin reagieren Polyethylen und Polyethylen-Copolymere mit Luftsauerstoff in dem dem Fachmann bekannten Autoxidationszyklus ([2] Hepperle, J.: Schädigungsmechanismen bei Polymeren. Polymeraufbereitung 2002, VDI-K, VDI-Verlag GmbH, [3] Zweifel, H.: Stabilization of Polymeric Materials. Springer, Berlin, 1997, [4] Schwarzenbach, K. et al.: Antioxidants. In Zweifel, H. (Hrsg.): Plastics Additives Handbook. Hanser, München, 2001, [5] Cheng, H.N., Schilling, F.C., Bovey, F.A.: 13C Nuclear Magnetic Resonance Observation of the Oxidation of Polyethylene, Macromolecules 9 (1976) S. 363-365) unter Bildung von geruchsintensiven und daher störenden niedermolekularen Komponenten wie beispielsweise Ketone, Aldehyde, Carbonsäuren, Hydroperoxide, Ester, Lactone und Alkohole.

Bei der Extrusion von Copolymeren auf Basis Polyethylen und Vinylacetat bildet sich bei zu hoher Temperatur zusätzlich geruchsintensive und korrosive Essigsäure.

Bei der Extrusion von Polypropylen und Polypropylen-Copolymeren zeigt sich bei zu hoher Temperatur Abbau von Molekulargewicht. Weiterhin reagieren Polyproplyen und Polypropylen-Copolymere mit Luftsauerstoff in dem Autoxidationszyklus unter Bildung von geruchsintensiven und daher störenden niedermolekularen Komponenten wie beispielsweise Ketone, Aldehyde, Carbonsäuren, Hydroperoxide, Ester, Lactone und Alkohole.

Bei der Extrusion von Polyvinylchlorid spaltet das Produkt bei zu hoher Temperatur unter Verfärbung korrosives Salzsäuregas ab, wobei die Salzsäure wiederum katalytisch bei der weiteren Abspaltung von Salzsäure wirkt.

Bei der Extrusion von Polystyrol bildet sich bei zu hoher Temperatur gesundheitsschädliches Styrol sowie dimeres und trimeres Styrol, mit Abbau von Molekulargewicht und entsprechendem Verschlechterung von mechanischen Eigenschaften.

Bei der Extrusion von Polystyrol - Acrylnitril - Copolymer (SAN) verfärbt sich das Produkt unter thermischer Belastung gelblich, was zu verringerter Transparenz führt, und bildet das krebserregende Monomer Acrylnitril sowie Styrol, unter Abbau von Molekulargewicht und Verschlechterung von mechanischen Eigenschaften.

Bei der Extrusion von aromatischen Polycarbonaten verfärbt sich das Produkt unter zu hoher thermischer Belastung, insbesondere unter Sauerstoffeinfluss, gelblich, was zu verringerter Transparenz führt, und zeigt Abbau im Molekulargewicht, insbesondere unter Einfluss von Wasser. Auch werden unter erhöhter Temperatur Monomere wie z.B. Bisphenol A zurückgespalten.

Bei der Extrusion von Polyester wie z.B. Polyethylenterephtalat, Polybutylenterephtaltat und Polytrimethylenterepthalat ergibt sich unter zu hoher Temperatur und Wassereinfluss eine Verringerung im Molekulargewicht und Verschiebung der Endgruppen im Molekül. Dies ist vor allem beim Recycling von Polyethylenterephtalat problematisch. Polyethylenterephtalat spaltet bei hoher Temperatur Acetaldehyd ab, was beispielsweise zu Veränderungen an Geschmack in dem Inhalt von Getränkeflaschen führen kann.

Bei der Extrusion von mit Dienkautschuken insbesondere mit Butadienkautschuk schlagzäh modifizierten Thermoplasten, insbesondere schlagzäh modifizierte Polystyroltypen (HIPS) und schlagzäh modifiziertes SAN (Acrylnitril-Butadien-Styrol, ABS) spaltet sich unter zu hoher Temperatur krebserregendes Butadien sowie giftiges Vinylcyclohexen ab. Weiterhin vernetzt der Dienkautschuk, so dass Verschlechterungen der mechanischen Eigenschaften des Produktes auftreten.

Bei der Extrusion von Polyoxymethylen spaltet sich bei zu hoher Temperatur giftiges Formaldehyd ab.

Bei der Extrusion von Polyamiden wie Polyamid 6, Polyamid 6,6, Polyamid 4,6, Polyamid 11 und Polyamid 12 führt zu hohe Temperatur zu Verfärbungen des Produktes und zu Molekulargewichtsabbau und zur Rückbildung von Monomeren und Dimeren und damit zu Verschlechterung von mechanischen Eigenschaften, vor allem in Gegenwart von Wasser.

Bei der Extrusion von thermoplastischen Polyurethanen führt zu hohe Temperatur zu Veränderungen der Molekülstruktur durch Umurethanisierung und, in Gegenwart von Wasser, zu Molekulargewichtsabbau. Beides beeinflusst die Eigenschaften des thermoplastischen Polyurethans in unerwünschter Weise.

Bei der Extrusion von Polymethylmethacrylat spaltet bei zu hoher thermischer Belastung unter Abbau von Molekulargewicht Methylmethacrylat ab, was zu Geruchsbelästigung und zu verschlechterten mechanischen Eigenschaften führt.

Bei der Extrusion von Polyphenylensulfid werden bei zu hoher Temperatur schwefelhaltige organische und anorganische Verbindungen abgespalten, die zu Geruchsbelästigung führen und zu Korrosion der Extrusionswerkzeuge führen können. Auch werden hierbei niedermolekulare Oligomere und Monomere gebildet und Molekulargewicht abgebaut, was die mechanischen Eigenschaften von Polyphenylensulfid verschlechtert.

Bei der Extrusion von Polyphenylsulfon werden bei zu hoher Temperatur organische Verbindungen abgespalten, vor allem in Gegenwart von Wasser. Auch reduziert sich das Molekulargewicht, wodurch die mechanischen Eigenschaften verschlechtert werden.

Bei der Extrusion von Polyphenylenether werden bei zu hoher Temperatur niedermolekulare organische Verbindungen abgespalten, wobei sich das Molekulargewicht reduziert. Dies führt zu einer Verschlechterung der mechanischen Eigenschaften des Produktes.

Bei der Extrusion von Dien-Kautschuken wie beispielsweise Polybutadien (BR), Naturkautschuk (NR) und synthetisches Polyisopren (IR), Butylkautschuk (IIR), Chlorbutylkautschuk (CIIR), Brombutylkautschuk (BIIR), Styrol-Butadien-Kautschuk (SBR), Polychloropren (CR), Butadien-Acrylnitril-Kautschuk (NBR), teilweise hydrierter Butadien-Acrylnitril-Kautschuk (HNBR) sowie Ethylen-Proplyen-Dien-Copolymere (EPDM) bildet sich bei zu hoher Temperatur durch Vernetzung Gel, das zu Verschlechterung von mechanischen Eigenschaften der daraus hergestellten Bauteile führt. Bei Chlor- und Brombutylkautschuk kann unter erhöhter Temperatur korrosives Salzsäure- bzw. Bromwasserstoffgas abgespalten werden, das wiederum die weitere Zersetzung des Polymers katalysiert.

Bei der Extrusion von Kautschukmischungen, die Vulkanisatoren wie z.B. Schwefel oder Peroxide enthalten, werden durch zu hohe Temperaturen zum vorzeitigen Vulkanisieren gebracht. Dies führt dazu, dass aus diesen Kautschukmischungen keine Produkte mehr hergestellt werden können.

Bei der Extrusion von Mischungen aus einem oder mehreren Polymeren bei zu hohen Temperaturen treten jeweils die Nachteile der Extrusion der einzelnen Polymere auf.

Weitere Schneckenelemente sind aus EP 0160124 bekannt.

Es stellt sich daher ausgehend vom Stand der Technik die Aufgabe, Schneckenelemente für mehrwellige Schneckenmaschinen bereitzustellen, die gleichzeitig einen möglichst hohen Wirkungsgrad beim Druckaufbau und eine möglichst niedrige thermische Produktbeanspruchung aufweisen.

Überraschend wurden neuartige Schneckenelemente gefunden, die gegenüber dem Stand der Technik reduzierte Kammwinkel aufweisen und die gleichzeitig einen möglichst hohen Wirkungsgrad beim Druckaufbau und eine möglichst niedrige thermische Produktbeanspruchung bewirken.

Gegenstand der Erfindung sind daher Schneckenelemente für mehrwellige Schneckenmaschinen, wobei
- die Summe aller Kammwinkel eines Paars von Schneckenelementen größer oder gleich 0 und kleiner als 2*π-8*arccos(0,5*a/ra) ist,
- die Anzahl der Kammbereiche eines Paars von Schneckenelementen größer als 4 ist,
- jedes Schneckenelement eines Paars von Schneckenelementen zwei Schneckenprofilbereiche aufweist, die jeweils aus Flanken- und Nutbereichen bestehen und bei denen die Summe der Flanken- und Nutwinkel jeweils größer π/2 ist.

Wie bereits oben erläutert, beträgt die Summe der Kammwinkel eines Paars von zweigängigen Schneckenelementen mit einem Erdmenger-Schneckenprofil 2*π-8*arccos(0,5*a/ra). Die erfindungsgemäßen Schneckenelemente weisen gegenüber Schneckenelementen mit einem zweigängigen Erdmenger-Schneckenprofil einen in seiner Länge reduzierten Bereich auf, der dem Schneckenaußenradius entspricht und in dem bekanntlich besonders viel Energie in das Extrusionsgut eingetragen wird. Dadurch wird der Energieeintrag wirksam reduziert und die Gefahr von Produktschädigung gemindert.

Die Summe aller Kammwinkel eines Paars von erfindungsgemäßen Schneckenelementen ist kleiner als 2*π-8*arccos(0,5*a/ra), bevorzugt kleiner als 0,8*(2*π-8*arccos(0,5*a/ra)), besonders bevorzugt kleiner als 0,6*(2*π-8*arccos(0,5*a/ra)) und am meisten bevorzugt kleiner als 0,4*(2*π-8*arccos(0,5*a/ra)).

Weiterhin beträgt die Summe der Kammbereiche bei einem Paar von zweigängigen Schneckenelementen mit einem Erdmenger-Schneckenprofil 4. Die Anzahl der Kammbereiche eines Paars von erfindungsgemäßen Schneckenelementen ist größer als 4, bevorzugt gleich 5 oder 6 und besonders bevorzugt gleich 8. Die Anzahl der Kammbereiche eines einzelnen Schneckenelements eines Paars von erfindungsgemäßen Schneckenelementen ist bevorzugt gleich 2 oder 3 und besonders bevorzugt gleich 4.

Erfindungsgemäß weist jedes Schneckenelement eines Paars von Schneckenelementen zwei Schneckenprofilbereiche auf, die jeweils aus Flanken- und Nutbereichen bestehen und bei denen die Summe der Flanken- und Nutwinkel jeweils größer π/2 ist. Diese beiden Schneckenprofilbereiche können auch als Kanalbereiche bezeichnet werden. In diesen Kanalbereichen befindet sich nahezu das gesamte Extrusionsgut.

Die Summe der Winkel eines Schneckenprofilbereichs, der aus Flanken- und Nutbereichen besteht, ist bevorzugt größer als 2*π/3.

Bei erfindungsgemäßen Schneckenelementen kann das erzeugende Schneckenprofil individuell gestaltet werden. Insbesondere können die Kanten, welche die Kammbereiche begrenzen, abgerundet werden.

Erfindungsgemäße Schneckenelemente sind vorzugsweise dadurch gekennzeichnet, dass einer oder mehrere Kammbereiche einen Kammwinkel von 0 besitzen. In einem solchen Fall erfolgt die Abreinigung des Gehäuses und die Abreinigung des Nutbereichs des benachbarten Schneckenelements mit einem Kammbereich, der auf ein Minimum reduziert ist. Dadurch wird auch der Energieeintrag und die Belastung des Extrusionsguts auf ein Minimum reduziert. Die Abdichtung ist punktförmig und ausreichend, um den erforderlichen Druckaufbau zu gewährleisten.

Erfindungsgemäße Schneckenelemente sind vorzugsweise dadurch gekennzeichnet, dass das erzeugte Schneckenprofil nach einer Drehung um π/2 identisch ist mit dem erzeugenden Schneckenprofil ist. Dies hat den Vorteil, dass für benachbarte Wellen keine unterschiedlichen Schneckenelemente gefertigt werden müssen.

Bevorzugte Schneckenelemente sind solche, die für alle Wellen eines Mehrwellenextruders bzw. die beiden Wellen eines Zweiwellenextruders ein identisches Schneckenprofil aufweisen.

Überraschend wurde gefunden, dass Schneckenprofile eines Paars von erfindungsgemäßen Schneckenelementen durch eine definierte Abfolge von Kamm-, Flanken- und Nutbereichen erzeugt werden können. Erfindungsgemäße Schneckenelemente sind dadurch gekennzeichnet, dass ein

erzeugendes und ein erzeugtes Schneckenprofil eine Abfolge von Kanalbereich - Schließbereich - Kanalbereich - Schließbereich aufweisen.

Unter Kanalbereich wird eine Abfolge von Flanken- und Nutbereichen verstanden. Bevorzugt ist ein Kanalbereich eine Abfolge von Flankenbereich - Nutbereich - Flankenbereich - Nutbereich - Flankenbereich, besonders bevorzugt eine Abfolge von Flankenbereich - Nutbereich - Flankenbereich.

Unter Schließbereich wird entweder ein Kammbereich oder eine Abfolge von Kamm- und Flankenbereichen verstanden. Bevorzugt ist ein Schließbereich eine Abfolge von Kammbereich-Flankenbereich - Kammbereich.

Anschaulich kann man ein Schneckenprofil eines erfindungsgemäßen Schneckenelements dadurch erhalten, indem man z.B. ausgehend von einem zweigängigen Erdmenger-Schneckenprofil einen Bereich aus dem Kammbereich des zweigängigen Erdmenger-Schneckenprofils "entfernt". Dadurch wird die Länge des Kammbereichs reduziert und anstelle eines zusammenhängenden Kammbereichs entstehen zwei Kammbereiche, zwischen denen nun eine "Lücke" auftritt. Zur Gewährleistung der Selbstreinigung muss dann im Nutbereich des zweigängigen Erdmenger-Schneckenprofils, von dem ausgegangen wurde, wieder ein Bereich "ergänzt" werden. Dadurch, dass bei erfindungsgemäßen Schneckenelementen jeweils zwei Schneckenprofilbereiche auftreten, die jeweils aus Flanken- und Nutbereichen bestehen und bei denen die Summe der Flanken- und Nutwinkel jeweils größer als π/2, bevorzugt größer als 2*π/3 ist, wird gewährleistet, dass sich der größte Teil des Extrusionsguts weiterhin in zwei Bereichen, den Kanalbereichen, befindet und durch die "Lücken" in den ursprünglichen Kammbereichen eines zweigängigen Erdmenger-Schneckenprofils keine nennenswerten zusätzlichen Gänge entstehen.

In einer bevorzugten Ausführungsform erfolgt das "Entfernen" im Kammbereich und das "Ergänzen" im Nutbereich derart, dass sich ein Schneckenprofil ergibt, welches sowohl zur x-Achse als auch zur y-Achse symmetrisch ist. Zur vollständigen Definition eines solchen symmetrischen Schneckenprofils muss nur ein erstes Viertel dieses Schneckenprofils bekannt sein, da der Rest des Schneckenprofils durch Spiegelung an den Achsen erhalten werden kann.

Überraschend wurde gefunden, das ausgehend von einem Viertel eines Schneckenprofils von erfindungsgemäßen Schneckenelementen weitere Schneckenprofile eines erfindungsgemäßen Schneckenelements erhalten werden können.

Ausgangspunkt ist ein Viertel eines Schneckenprofils, das in den 1. Quadranten eines xy-Koordinatensystems gelegt wird, und durch dessen Spiegelung an der x- und y-Achse sich ein

Schneckenprofil von erfindungsgemäßen Schneckenelementen ergibt. Durch Spiegelung des Flanken- und Nutbereichs des besagten Viertels an der y-Achse erhält man einen ersten Kanalbereich, der aus Flanken- und Nutbereichen besteht. Durch Spiegelung dieses ersten Kanalbereichs an der x-Achse erhält man einen zweiten Kanalbereich, der aus Flanken- und Nutbereichen besteht. Die Bereiche zwischen den beiden Kanalbereichen werden durch einen Kammbereich oder durch eine Abfolge von Kamm- und Flankenbereichen, bevorzugt durch eine Abfolge von Kammbereich - Flankenbereich - Kammbereich derart ergänzt, dass sich ein geschlossenes Schneckenprofil ergibt. Derartige Bereiche werden auch als Schließbereiche bezeichnet. Der Winkel zwischen dem Anfangs- und dem Endpunkt eines Schließbereichs bezogen auf den Drehpunkt des Schneckenprofils wird als Schließwinkel bezeichnet.

In einer bevorzugten Ausführungsform wird ein zweiter Kanalbereich durch Drehung des ersten Kanalbereichs um einen Winkel im Bereich von n bis π-[π/2-2*arccos(0,5*a/ra)] in oder gegen den Uhrzeigersinn um den Drehpunkt des Schneckenprofils erhalten. Der Term in den eckigen Klammern ist gleich dem Kammwinkel eines Schneckenelements mit einem zweigängigen Erdmenger-Schneckenprofil. Durch das Drehen des ersten Kanalbereichs um einen Winkel kleiner als n ergibt sich, dass die beiden Schließbereiche zwischen den beiden Bereichen, die aus Flanken- und Nutbereichen bestehen, ungleich groß sind. Die Drehung erfolgt um einen Winkel, so dass der Schließwinkel eines der beiden Schließbereiche bevorzugt größer als der 1,2-fache, besonders bevorzugt größer als der 1,6-fache Kammwinkel eines zweigängigen Erdmenger-Schneckenprofils mit entsprechendem Schneckenaußenradius ist und am meisten bevorzugt größer ist als der Gehäuseöffnungswinkel, der sich durch 2*arccos(0,5*a/ra) berechnet. In diesen Fällen besteht der zweite der beiden Schließbereiche besonders bevorzugt aus einem Kammbereich, wodurch das gewonnene Schneckenprofil aus insgesamt 3 Kammbereichen besteht.

Überraschend wurde gefunden, dass sich ein erster Kanalbereich aus den Flanken- und Nutbereichen von zwei unterschiedlichen Vierteln eines Schneckenprofils zusammensetzen lässt. Der zweite Kanalbereich kann aus einem der beiden Viertel des ersten Kanalbereichs oder aus einer Kombination der beiden Viertel des ersten Kanalbereichs zusammengesetzt sein. Es ist auch möglich, dass der zweite Kanalbereich aus einem oder zwei weiteren Vierteln zusammengesetzt ist. Insbesondere ist es möglich, dass eines oder mehrere der Viertel auf einem zweigängigen Erdmenger-Schneckenprofil basieren. Es lassen sich in allen genannten Fällen Profile erfindungsgemäßer Schneckenelemente generieren.

Mit den vorgestellten einfachen Methoden zur Erzeugung von Schneckenprofilen erfindungsgemä-βer Schneckenelemente lassen sich sowohl symmetrische als auch asymmetrische Schneckenprofile erzeugen. Ferner lassen sich Scheckenprofile erzeugen, bei denen das erzeugte Schneckenprofil nach einer Drehung um π/2 identisch oder verschieden ist von dem erzeugenden Schneckenprofil.

Der auf den Achsabstand normierte Schneckenaußenradius erfindungsgemäßer Schneckenelemente liegt bevorzugt im Bereich von 0,51 bis 0,66 und besonders bevorzugt im Bereich von 0,52 bis 0,575.

Die Erfindung ist nicht auf Schneckenelemente aus der heutzutage üblichen Modulbauweise einer Schnecke mit einzelnen Schneckenelementen und Kernwellen beschränkt, sondern auch auf Schnecken in Massivbauweise anwendbar. Daher sind unter dem Begriff Schneckenelemente auch Schnecken in Massivbauweise zu verstehen.

Die erfindungsgemäß zu verwendenden Schneckenelemente können als Förderelemente, Knetelemente und / oder Mischelemente verwendet werden.

Ein Förderelement zeichnet sich bekanntlich dadurch aus (siehe zum Beispiel [1], Seiten 227 - 248), dass das Schneckenprofil in Achsrichtung kontinuierlich schraubenförmig verdreht und fortgesetzt wird. Dabei kann das Förderelement rechts- oder linksgängig sein. Die Steigung des Förderelements liegt bevorzugt im Bereich des 0, 1 -fachen bis 10-flachen des Achsabstandes, wobei unter der Steigung die axiale Länge verstanden wird, die für eine vollständige Drehung des Schneckenprofils erforderlich ist, und die axiale Länge eines Förderelements liegt bevorzugt im Bereich des 0,1-fachen bis 10-fachen des Achsabstands.

Ein Knetelement zeichnet sich bekanntlich dadurch aus (siehe zum Beispiel [1], Seiten 227 - 248), dass das Schneckenprofil in Achsrichtung absatzweise in Form von Knetscheiben fortgeführt wird. Die Anordnung der Knetscheiben kann rechts- oder linksgängig oder neutral erfolgen. Die axiale Länge der Knetscheiben liegt bevorzugt im Bereich des 0,05-fachen bis 10-fachen des Achsabstands. Der axiale Abstand zwischen zwei benachbarten Knetscheiben liegt bevorzugt im Bereich des 0,002-fachen bis 0,1-fachen des Achsabstandes.

Mischelemente werden bekanntlich dadurch gebildet (siehe zum Beispiel [1], Seiten 227 - 248), dass Förderelemente mit Durchbrüchen in den Schneckenkämmen ausgeführt werden. Die Mischelemente können rechts- oder linksgängig sein. Ihre Steigung liegt bevorzugt im Bereich des 0,1-fachen bis 10-fachen des Achsabstandes und die axiale Länge der Elemente liegt bevorzugt im Bereich des 0,1-fachen bis 10-fachen des Achsabstandes. Die Durchbrüche haben bevorzugt die Form einer u- oder v-förmigen Nut, die bevorzugt gegenfördernd oder achsparallel angeordnet sind.

Dem Fachmann ist bekannt, dass direkt abschabende Schneckenprofile nicht direkt in einen Doppelschneckenextruder eingesetzt werden können, vielmehr sind Spiele zwischen den Schnecken erforderlich. Hierfür sind in [1] auf den Seiten 28 ff verschiedene mögliche Strategien beschrieben. Für die Schneckenprofile erfindungsgemäßer Schneckenelemente können Spiele im Bereich von 0,001 bis 0,1, bezogen auf den Durchmesser des Schneckenprofils, verwendet werden, bevorzugt 0,002 bis 0,05 und besonders bevorzugt 0,004 bis 0,02. Die Spiele können, wie dem Fachmann bekannt ist, zwischen Schnecke und Gehäuse und zwischen Schnecke und Schnecke unterschiedlich groß oder gleich sein. Die Spiele können auch konstant oder, in den angegebenen Grenzen, variabel sein. Es ist auch möglich, innerhalb der Spiele ein Schneckenprofil zu verschieben. Mögliche Spielstrategien sind die in [1] auf den Seiten 28 ff beschriebene Möglichkeit der Achsabstand-Vergrößerung, der Längsschnitt-Äquidistanten und der Raumäquidistanten, die alle dem Fachmann bekannt sind. Bei der Achsabstand-Vergrößerung wird ein Schneckenprofil kleineren Durchmessers konstruiert und um den Betrag des Spiels zwischen den Schnecken auseinandergerückt. Bei der Methode der Längsschnitt-Äquidistanten wird die Längsschnitt-Profilkurve (parallel zur Achse) um das halbe Spiel Schnecke-Schnecke nach innen verschoben. Bei der Methode der Raumäquidistanten wird, ausgehend von der Raumkurve, auf der die Schneckenelemente sich abreinigen, das Schneckenelement in der Richtung senkrecht zu den Flächen des exakt abschabenden Profils um das halbe Spiel zwischen Schnecke und Schnecke verkleinert. Bevorzugt wird die Längsschnitt-Äquidistante und die Raumäquidistante, besonders bevorzugt die Raumäquidistante verwendet.

Die Profile erfindungsgemäßer Schneckenelemente lassen sich nach einem der in PCT/EP2009/003549 beschriebenen Verfahren konstruieren. Ein mögliches Verfahren wird im Folgenden beschrieben.

Das Verfahren zur Erzeugung dicht kämmender, selbstreinigender, gleichsinnig drehender Schneckenprofile mit einem wählbaren Achsabstand a zwischen den Drehachsen eines erzeugenden und eines erzeugten Schneckenprofils, ist dadurch gekennzeichnet, dass das erzeugende Schneckenprofil aus n Kreisbögen und das erzeugte Schneckenprofil aus n' Kreisbögen gebildet wird, wobei
- das erzeugende Schneckenprofil und das erzeugte Schneckenprofil in einer Ebene liegen,
- die Drehachse des erzeugenden Schneckenprofils und die Drehachse des erzeugten Schneckenprofils jeweils senkrecht auf der besagten Ebene der Schneckenprofile stehen, wobei der Schnittpunkt der Drehachse des erzeugenden Schneckenprofils mit der besagten Ebene als Drehpunkt des erzeugenden Schneckenprofils und der Schnittpunkt der Drehachse des erzeugten Schneckenprofils mit der besagten Ebene als Drehpunkt des erzeugten Schneckenprofils bezeichnet wird,
- die Anzahl der Kreisbögen n des erzeugenden Schneckenprofils gewählt wird, wobei n eine ganze Zahl ist, die größer oder gleich 1 ist,
- ein Außenradius ra des erzeugenden Schneckenprofils gewählt wird, wobei ra einen Wert annehmen kann, der größer als 0 (ra>0) und kleiner oder gleich dem Achsabstand (ra≤a) ist,
- ein Kernradius ri des erzeugenden Schneckenprofils gewählt wird, wobei ri einen Wert annehmen kann, der größer oder gleich 0 (ri≥0) und kleiner oder gleich ra (ri≤ra) ist,
- die Kreisbögen des erzeugenden Schneckenprofils im oder gegen den Uhrzeigersinn um die Drehachse des erzeugenden Schneckenprofils entsprechend den nachfolgenden Anordnungsregeln derart angeordnet werden, dass:
   o alle Kreisbögen des erzeugenden Schneckenprofils derart tangential ineinander übergehen, dass sich ein geschlossenes, konvexes Schneckenprofil ergibt, wobei ein Kreisbogen, dessen Radius gleich 0 ist, vorzugsweise wie ein Kreisbogen behandelt wird, dessen Radius gleich eps ist, wobei eps eine sehr kleine positive reelle Zahl ist, die gegen 0 strebt (eps«1, eps→0),
   o jeder der Kreisbögen des erzeugenden Schneckenprofils innerhalb oder auf den Grenzen eines Kreisrings mit dem Außenradius ra und dem Kernradius ri liegt, dessen Mittelpunkt auf dem Drehpunkt des erzeugenden Schneckenprofils liegt,
   o mindestens einer der Kreisbögen des erzeugenden Schneckenprofils den Außenradius ra des erzeugenden Schneckenprofils berührt,
   o mindestens einer der Kreisbögen des erzeugenden Schneckenprofils den Kernradius ri des erzeugenden Schneckenprofils berührt,
- die Größe eines ersten Kreisbogens des erzeugenden Schneckenprofils, die durch einen Winkel α_1 und einen Radius r_1 festgelegt ist, derart gewählt wird, dass der Winkel α_1 im Bogenmaß größer oder gleich 0 und kleiner oder gleich 2π ist, wobei unter n die Kreiszahl zu verstehen ist (π≈3,14159), und der Radius r_1 größer oder gleich 0 und kleiner oder gleich dem Achsabstand a ist, und die Position dieses ersten Kreisbogens des erzeugenden Schneckenprofils, die sich durch das Positionieren von zwei verschiedenen Punkten dieses ersten Kreisbogens ergibt, entsprechend den besagten Anordnungsregeln festgelegt wird, wobei ein erster zu positionierender Punkt dieses ersten Kreisbogens bevorzugt ein zu diesem ersten Kreisbogen zugehörender Anfangspunkt ist und wobei ein zweiter zu positionierender Punkt dieses ersten Kreisbogens bevorzugt der zu diesem ersten Kreisbogen zugehörende Mittelpunkt ist,
- die Größen von weiteren n-2 Kreisbögen des erzeugenden Schneckenprofils, die durch die Winkel α_2, ..., α_(n-1) und die Radien r_2, ..., r_(n-1) festgelegt sind, derart gewählt werden, dass die Winkel α_2, ..., α_(n-1) im Bogenmaß größer oder gleich 0 und kleiner oder gleich 2π sind und die Radien r_2, ..., r_(n-1) größer oder gleich 0 und kleiner oder gleich dem Achsabstand a sind, und die Positionen dieser weiteren n-2 Kreisbögen des erzeugenden Schneckenprofils entsprechend den besagten Anordnungsregeln festgelegt sind,
- die Größe eines letzten Kreisbogens des erzeugenden Schneckenprofils, die durch einen Winkel α_n und einen Radius r_n festgelegt ist, dadurch gegeben ist, dass die Summe der n Winkel der n Kreisbögen des erzeugenden Schneckenprofils im Bogenmaß gleich 2π ist, wobei der Winkel α_n im Bogenmaß größer oder gleich 0 und kleiner oder gleich 2π ist, und der Radius r_n das erzeugende Schneckenprofil schließt, wobei der Radius r_n größer oder gleich 0 und kleiner oder gleich dem Achsabstand a ist, und die Position dieses letzten Kreisbogens des erzeugenden Schneckenprofils entsprechend den besagten Anordnungsregeln festgelegt ist,
- sich die n' Kreisbögen des erzeugten Schneckenprofils aus den n Kreisbögen des erzeugenden Schneckenprofils dadurch ergeben, dass
   o die Anzahl der Kreisbögen n' des erzeugten Schneckenprofils gleich der Anzahl der Kreisbögen n des erzeugenden Schneckenprofils ist, wobei n' eine ganze Zahl ist,
   o der Außenradius ra' des erzeugten Schneckenprofils gleich der Differenz des Achsabstandes minus des Kernradius ri des erzeugenden Schneckenprofils ist (ra'=a-ri),
   o der Kernradius ri' des erzeugten Schneckenprofils gleich der Differenz des Achsabstandes minus des Außenradius ra des erzeugenden Schneckenprofils ist (ri'=a-ra),
   o der Winkel α_i' des i'-ten Kreisbogens des erzeugten Schneckenprofils gleich dem Winkel α_i des i-ten Kreisbogens des erzeugenden Schneckenprofils ist, wobei i und i' ganze Zahlen sind, die gemeinsam alle Werte im Bereich von 1 bis zur Anzahl der Kreisbögen n beziehungsweise n' durchlaufen (α_1'=α_1, α_n'=α_n),
   o die Summe des Radius r_i' des i'-ten Kreisbogens des erzeugten Schneckenprofils und des Radius r_i des i-ten Kreisbogens des erzeugenden Schneckenprofils gleich dem Achsabstand a ist, wobei i und i' ganze Zahlen sind, die gemeinsam alle Werte im Bereich 1 bis zur Anzahl der Kreisbögen n beziehungsweise n' durchlaufen (r_1'+ r_1=a, ..., r_n'+ r_n=a),
   o der Mittelpunkt des i'-ten Kreisbogens des erzeugten Schneckenprofils einen Abstand von dem Mittelpunkt des i-ten Kreisbogens des erzeugenden Schneckenprofils besitzt, der gleich dem Achsabstand a ist, und der Mittelpunkt des i'-ten Kreisbogens des erzeugten Schneckenprofils einen Abstand von dem Drehpunkt des erzeugten Schneckenprofils besitzt, der gleich dem Abstand des Mittelpunkts des i-ten Kreisbogens des erzeugenden Schneckenprofils von dem Drehpunkt des erzeugenden Schneckenprofils ist, und die Verbindungslinie zwischen dem Mittelpunkt des i'-ten Kreisbogens des erzeugten Schneckenprofils und dem Mittelpunkt des i-ten Kreisbogens des erzeugenden Schneckenprofils eine Parallele zu einer Verbindungslinie zwischen dem Drehpunkt des erzeugten Schneckenprofils und dem Drehpunkt des erzeugenden Schneckenprofils ist, wobei i und i' ganze Zahlen sind, die gemeinsam alle Werte im Bereich 1 bis zur Anzahl der Kreisbögen n beziehungsweise n' durchlaufen (i'=i),
   o ein Anfangspunkt des i'-ten Kreisbogens des erzeugten Schneckenprofils in einer Richtung bezogen auf den Mittelpunkt des i'-ten Kreisbogens des erzeugten Schneckenprofils liegt, die entgegengesetzt derjenigen Richtung ist, die ein Anfangspunkt des i-ten Kreisbogens des erzeugenden Schneckenprofils bezogen auf den Mittelpunkt des i-ten Kreisbogens des erzeugenden Schneckenprofils besitzt, wobei i und i' ganze Zahlen sind, die gemeinsam alle Werte im Bereich 1 bis zur Anzahl der Kreisbögen n beziehungsweise n' durchlaufen (i'=i).

Erfindungsgemäß sind die Kreisbögen des erzeugenden und erzeugten Schneckenprofils so zu wählen bzw. aufeinander abzustimmen, dass die Summe aller Kammwinkel eines Paars von Schneckenelementen größer oder gleich 0 und kleiner als 2*π-8*arccos(0,5*a/ra) ist, die Anzahl der Kammbereiche eines Paars von Schneckenelementen größer als 4 ist und jedes Schneckenelement eines Paars von Schneckenelementen zwei Schneckenprofilbereiche aufweist, die jeweils aus Flanken- und Nutbereichen bestehen und bei denen die Summe der Flanken- und Nutwinkel jeweils größer π/2 ist.

Aus dem beschriebenen Verfahren zur Erzeugung von ebenen, dicht kämmenden, selbstreinigenden, gleichsinnig drehenden Schneckenprofilen folgt für das erzeugte Schneckenprofil, dass
- das erzeugte Schneckenprofil geschlossen ist,
- das erzeugte Schneckenprofil konvex ist,
- jeder der Kreisbögen des erzeugten Schneckenprofils tangential in den nachfolgenden Kreisbogen des erzeugten Schneckenprofils übergeht, wobei ein Kreisbogen, dessen Radius gleich 0 ist, vorzugsweise wie ein Kreisbogen behandelt wird, dessen Radius gleich eps ist, wobei eps eine sehr kleine positive reelle Zahl ist, die gegen 0 strebt (eps«1, eps →0),

- jeder der Kreisbögen des erzeugten Schneckenprofils innerhalb oder auf den Grenzen eines Kreisrings mit dem Außenradius ra' und dem Kernradius ri' liegt, dessen Mittelpunkt auf dem Drehpunkt des erzeugten Schneckenprofils liegt,
- mindestens einer der Kreisbögen des erzeugten Schneckenprofils den Außenradius ra' des erzeugten Schneckenprofils berührt,
- mindestens einer der Kreisbögen des erzeugten Schneckenprofils den Kernradius ri' des erzeugten Schneckenprofils berührt.

Aus dem beschriebenen Verfahren zur Erzeugung von ebenen, dicht kämmenden, selbstreinigenden, gleichsinnig drehenden Schneckenprofilen folgt ferner, dass nur in dem Fall, in dem der Kernradius ri des erzeugenden Schneckenprofils gleich der Differenz des Achsabstandes a minus dem Außenradius ra des erzeugenden Schneckenprofils ist (ri=a-ra), der Außenradius ra' des erzeugten Schneckenprofils gleich dem Außenradius ra des erzeugenden Schneckenprofils und der Kernradius ri' des erzeugten Schneckenprofils gleich dem Kernradius ri des erzeugenden Schneckenprofils ist.

Besitzt das erzeugende Schneckenprofil einen Kreisbogen mit dem Radius r_i=0, so weist das Schneckenprofil an der Stelle des Kreisbogens einen Knick auf, dessen Größe durch den Winkel α_i gekennzeichnet ist. Besitzt das erzeugte Schneckenprofil einen Kreisbogen mit dem Radius r_i'=0, so weist das Schneckenprofil an der Stelle des Kreisbogens einen Knick auf, dessen Größe durch den Winkel α_1' gekennzeichnet ist.

Das beschriebene Verfahren zur Erzeugung von ebenen, dicht kämmenden, selbstreinigenden, gleichsinnig drehenden Schneckenprofilen ist ferner dadurch charakterisiert, dass es sich allein mit Winkellineal und Zirkel ausführen lässt. So wird der tangentiale Übergang zwischen dem i-ten und dem (i+1)-ten Kreisbogen des erzeugenden Schneckenprofils konstruiert, indem um den Endpunkt des i-ten Kreisbogens ein Kreis mit dem Radius r_(i+1) geschlagen wird und der näher zum Drehpunkt des erzeugenden Schneckenprofils gelegene Schnittpunkt dieses Kreises mit der Gerade, die durch den Mittelpunkt und den Endpunkt des i-ten Kreisbogens definiert ist, der Mittelpunkt des (i+1)-ten Kreisbogens ist. Praktischerweise wird man anstelle von Winkellineal und Zirkel ein Computerprogramm zur Konstruktion der Schneckenprofile verwenden.

Die nach dem allgemeinen Verfahren erzeugten Schneckenprofile sind unabhängig von einer Gangzahl z.

Das erzeugte Schneckenprofil kann ungleich dem erzeugenden Schneckenprofil sein. Wie der Fachmann anhand der Ausführungen leicht versteht, ist das beschriebene Verfahren insbesondere dazu geeignet, Übergangselemente zwischen Schneckenelementen unterschiedlicher Gangzahl zu erzeugen. Ausgehend von einem z-gängigen Schneckenprofil ist es möglich, das erzeugende und das erzeugte Schneckenprofil Schritt für Schritt so zu ändern, dass man schließlich ein Schneckenprofil mit einer Gangzahl z' ungleich z erhält. Es ist hierbei zulässig, die Anzahl der Kreisbögen während des Übergangs zu verringern oder zu vergrößern.

Bei symmetrischen Profilen kann das Verfahren vereinfacht werden, indem nur Teile der Schneckenprofile konstruiert und die fehlenden Teile durch Symmetrieoperationen aus den konstruierten Teilen erzeugt werden. Dies ist im Detail in PCT/EP2009/003549 beschrieben.

Es empfiehlt sich, das Verfahren zur Erzeugung von Schneckenprofilen auf einem Computer durchzuführen. Die Abmessungen der Schneckenelemente liegen dann in einer Form vor, in der sie einer CAD-Fräsmaschine zur Erzeugung der Schneckenelemente zugeführt werden können.

Nachdem die Profile auf die beschriebene Weise erzeugt worden ist, können die erfindungsgemäßen Schneckenelemente z.B. mit einer Fräsmaschine erzeugt werden. Bevorzugte Materialien zur Erzeugung der Schneckenelemente sind Stähle, insbesondere Nitrierstähle und Edelstähle.

Gegenstand der vorliegenden Erfindung ist weiterhin die Verwendung der erfindungsgemäßen Schneckenelemente in mehrwelligen Schneckenmaschinen. Bevorzugt werden die erfindungsgemäßen Schneckenelemente in zweiwelligen Schneckenmaschinen eingesetzt. Die Schneckenelemente können in den mehrwelligen Schneckenmaschinen in Form von Knet- oder Förderelementen vorliegen. Es ist ebenso möglich, Knet- und Förderelemente in einer Scheckenmaschine miteinander zu kombinieren. Die erfindungsgemäßen Schneckenelemente können auch mit anderen Schneckenelementen, die nach dem Stand der Technik bekannt sind, kombiniert werden.

Die Verwendung der neuartigen erfindungsgemäßen Schneckenelemente in mehrwelligen Schneckenmaschinen zeichnet sich dadurch aus, dass durch die reduzierten Kammbereiche die thermische Produktbelastung im Kammbereich minimiert wird. Durch die erfindungsgemäße Verwendung wird eine Erhöhung des Wirkungsgrads beim Druckaufbau ermöglicht und durch den geringeren Energieeintrag die Produkterwärmung minimiert.

Gegenstand der vorliegenden Erfindung ist weiterhin ein Verfahren zur Extrusion plastischer Massen in einem Doppelschnecken- oder Mehrwellenextruder unter Verwendung von erfindungsgemäßen Schneckenelementen, dadurch gekennzeichnet, dass
- die Summe aller Kammwinkel eines Paars von Schneckenelementen größer oder gleich 0 und kleiner als 2*π-8*arccos(0,5*a/ra) ist,
- die Anzahl der Kammbereiche eines Paars von Schneckenelementen größer als 4 ist,
- jedes Schneckenelement eines Paars von Schneckenelementen zwei Schneckenprofilbereiche aufweist, die jeweils aus Flanken- und Nutbereichen bestehen und bei denen die Summe der Flanken- und Nutwinkel jeweils größer π/2 ist.

Die Summe aller Kammwinkel eines Paars von erfindungsgemäßen Schneckenelementen ist bevorzugt kleiner als 0,8*(2*π-8*arccos(0,5*a/ra)) und besonders bevorzugt kleiner als 0,6*(2*π-8*arccos(0,5*a/ra)) und am meisten bevorzugt kleiner als 0,4*(2*π-8*arccos(0,5*a/ra)).

Die Anzahl der Kammbereiche eines Paars von erfindungsgemäßen Schneckenelementen ist bevorzugt gleich 6 und besonders bevorzugt gleich 8. Die Anzahl der Kammbereiche eines erfindungsgemäßen Schneckenelements ist bevorzugt gleich 2 und besonders bevorzugt gleich 4.

Die Summe der Winkel eines Schneckenprofilbereichs, der aus Flanken- und Nutbereichen besteht, ist bevorzugt größer als 2*π/3.

Bei erfindungsgemäßen Schneckenelementen kann das erzeugende Schneckenprofil individuell gestaltet werden. Insbesondere können die Kanten, welche die Kammbereiche begrenzen, abgerundet werden.

Plastische Massen, die erfindungsgemäß mit hoher Effizienz bei gleichzeitiger Produktschonung extrudiert werden können, sind z.B. Suspensionen, Pasten, Glas, Keramische Massen, Metalle in Form einer Schmelze, Kunststoffe, Kunststoffschmelzen, Polymerlösungen, Elastomer- und Kautschuk-Massen.

Bevorzugt werden Kunststoffe und Polymerlösungen eingesetzt, besonders bevorzugt thermoplastische Polymere. Als thermoplastisches Polymer wird bevorzugt wenigstens eines aus der Reihe Polycarbonat, Polyamid, Polyester, insbesondere Polybutylenterephthalat und Polyethylenterephthalat, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere und Polyvinylchlorid eingesetzt. Ebenso bevorzugt eingesetzt werden so genannte Blends aus den aufgeführten Kunststoffen, worunter der Fachmann eine Kombination aus zwei oder mehreren Kunststoffen versteht.

Weitere bevorzugte Einsatzmaterialien sind Kautschuke. Als Kautschuk wird bevorzugt wenigstens einer aus der Reihe Styrol-Butadien-Kautschuk, Naturkautschuk, Butatiden-Kautschuk, Isopren-Kautschuk, Ethylen-Propylen-Dien-Kautschuk, Ethylen-Propylen-Kautschuk, Butadien-Acrylnitril-Kautschuk, hydrierter Nitrilkautschuk, Butylkautschuk, Halobutylkautschuk, Chloropren-Kautschuk, Ethylen-Vinylacetat-Kautschuk, Polyurethan-Kautschuk, Thermoplastisches Polyurethan, Guttapercha, Arylatkautschuk, Fluorkautschuk, Siliconkautschuk, Sulfidkautschuk, Chlorsulfonyl-Polyäthylen-Kautschuk eingesetzt. Eine Kombination von zwei oder mehreren der aufgeführten Kautschuke, oder eine Kombination aus einem oder mehreren Kautschuk mit einem oder mehreren Kunststoffen ist natürlich auch möglich.

Diese Thermoplaste und Elastomere können in reiner Form oder als Mischungen mit Füll- und Verstärkungsstoffen, wie insbesondere Glasfasern, als Mischungen untereinander oder mit anderen Polymeren oder als Mischungen mit üblichen Polymeradditiven eingesetzt werden

In einer bevorzugten Ausführungsform werden den plastischen Massen, insbesondere den Polymerschmelzen und Mischungen von Polymerschmelzen, Additive beigemengt. Diese können als Feststoffe, Flüssigkeiten oder Lösungen gemeinsam mit dem Polymer in den Extruder gegeben werden oder aber es wird wenigstens ein Teil der Additive oder alle Additive dem Extruder über einen Seitenstrom zugeführt.

Additive können einem Polymer vielfältige Eigenschaften verleihen. Dies können beispielsweise Farbmittel, Pigmente, Verarbeitungshilfsmittel, Füllstoffe, Antioxidantien, Verstärkungsstoffe, UV-Absorber und Lichtstabilisatoren, Metalldesaktivatoren, Peroxidfänger, basische Stabilisatoren, Keimbildner, als Stabilisatoren oder Antioxidatien wirksame Benzofurane und Indolinone, Formtrennmittel, flammhemmende Additive, antistatische Mittel, Färbemittel und Schmelzestabilisatoren. Beispielhaft für diese sind Ruß, Glasfaser, Ton, Glimmer, Graphitfaser, Titandioxid, Kohlenstofffasern, Kohlenstoffnanoröhrchen, ionische Flüssigkeiten und Naturfasern.

Die Erfindung wird nachstehend anhand der Figuren beispielhaft näher erläutert ohne sie jedoch auf diese zu beschränken. Alle Figuren wurden mit Hilfe eines Computerprogramms erzeugt. Sinnvollerweise verwendet man zur Erzeugung und / oder Beschreibung von Schneckenprofilen und -elementen dimensionslose Kennzahlen, um die Übertragbarkeit auf unterschiedliche Extruderbaugrößen zu vereinfachen. Als Bezugsgröße für geometrische Größen wie zum Beispiel Längen oder Radien bietet sich der Achsabstand a an, da diese Größe an einem Extruder nicht verändert werden kann. Für den dimensionslosen Achsabstand folgt A = a / a = 1. Für den dimensionslosen Schneckenaußenradius eines Schneckenprofils folgt RA = ra / a. Der dimensionslose Kernradius eines Schneckenprofils berechnet sich zu RI = ri/a. Die dimensionslose Gangtiefe eines Schneckenprofils berechnet sich zu H = h / a = RA - RI.

In den Figuren werden alle geometrischen Größen in ihrer dimensionslosen Form verwendet. Alle Winkelangaben erfolgen im Bogenmaß.

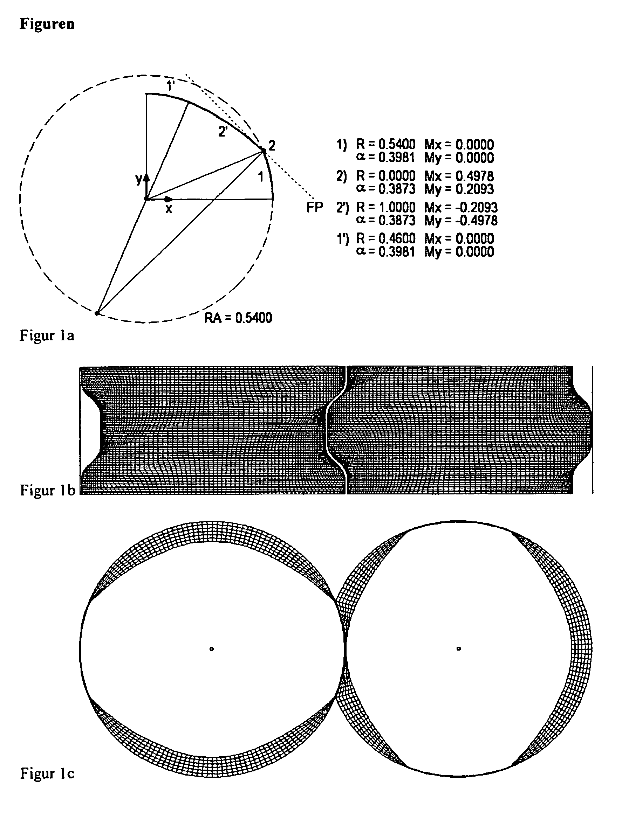

Die Figuren 1a und 2a, die Figuren 3 bis 6, die Figuren 8 und 9 sowie die Figur 15a zeigen jeweils im Querschnitt ein Viertel eines Schneckenprofils eines erfindungsgemäßen Schneckenelements. Alle diese Figuren weisen den gleichen Aufbau auf, der nachfolgend im Detail beschrieben wird. In der Mitte der Figuren liegt das xy-Koordinatensystem, in dessen Ursprung sich der Drehpunkt des Schneckenprofils befindet. Die Kreisbögen des Schneckenprofils sind durch dicke, durchgezogene Linien gekennzeichnet, die mit den jeweiligen Nummern der Kreisbögen versehen sind. Die Mittelpunkte der Kreisbögen werden durch kleine Kreise dargestellt. Die Mittelpunkte der Kreisbögen sind mit dünnen, durchgezogenen Linien sowohl mit dem Anfangspunkt als auch mit dem Endpunkt des dazugehörigen Kreisbogens verbunden. Die Gerade FP wird durch eine dünne, gepunktete Linie dargestellt. Der Schneckenaußenradius RA wird durch eine dünne, gestrichelte Linie charakterisiert, dessen Zahlenwert rechts unten in der Figur auf vier signifikante Stellen angegeben wird. Rechts neben den Figuren werden zu jedem Kreisbogen der Radius R, der Winkel α und die x- und y-Koordinate des Kreisbogenmittelpunkts Mx und My jeweils auf vier signifikante Stellen angegeben. Durch diese Angaben ist das Schneckenprofil eindeutig definiert. Die Schneckenprofile sind jeweils spiegelsymmetrisch zur x- und y-Achse, sodass sich die gesamten Schneckenprofile durch Spiegelung des gezeigten Viertels an der x- und y-Achse ergeben würden.

Schneckenprofile, bei denen ein Viertel des Schneckenprofils aus insgesamt n Kreisbögen besteht, werden nachfolgend als n-Kreis-Schneckenprofile bezeichnet.

Die Nummerierung der Kreisbögen eines n-Kreis-Schneckenprofls in den Figuren 1a und 2a, den Figuren 3 bis 6, den Figuren 8 und 9 sowie der Figur 15a erfolgt derart, dass die ersten n/2 Kreisbögen in aufsteigender Reihenfolge 1 bis n/2 durchnummeriert werden und die letzten n/2 Kreisbögen in absteigender Reihenfolge (n/2)' bis 1' durchnummeriert werden. Der Kreisbogen n/2 und der Kreisbogen (n/2)' berühren jeweils die Gerade FP. Jeder Kreisbogen i des Schneckenprofils korrespondiert mit einem Kreisbogen i' des Schneckenprofils. Der Radius eines Kreisbogens i' berechnet sich aus der Differenz von Achsabstand minus des Radius des Kreisbogens i, also R_i'=A-R_i. Der Winkel eines Kreisbogens i' ist gleich dem Winkel eines Kreisbogens i, also α_i'=α_i. Daraus folgt, dass ein Kammbereich mit einem Kreisbogen j gleich einem Nutbereich mit einem Kreisbogen j' ist. Daraus folgt ferner, dass ein Nutbereich mit einem Kreisbogen j gleich einem Kammbereich mit einem Kreisbogen j' ist.

Figur 1: Die Figur 1a zeigt ein Viertel eines zweigängigen Erdmenger-Schneckenprofils gemäß Stand der Technik, welches aus 4 Kreisbögen aufgebaut ist. Charakteristisch für Erdmenger-Schneckenprofile ist, dass der Radius R_1=RA, der Radius R_2=0, der Radius R_2'=A=1 und der Radius R_1'=A-RA=RI ist. Die Winkel α_1, α_2, α_2' und α_1 ' hängen vom Schneckenaußenradius und vom Achsabstand ab. Der Winkel α_1 ist gleich dem halben Kammwinkel eines zweigängigen Erdmenger-Schneckenprofils. Die Summe der Kammwinkel eines Paars von Schneckenelementen mit einem zweigängigen Erdmenger-Schneckenprofil berechnet sich damit zu 8*α_1. Das Erdmenger-Schneckenprofil weist an der Stelle des Radius R_2 einen Knick auf. Die "Größe des Knicks" ist durch den Winkel α_2 gegeben, d.h. der Übergang vom Kreisbogen 1 auf den Kreisbogen 2' erfolgt durch Drehung um den Winkel α_2.

In der Figur 1a beträgt der dimensionslose Schneckenaußenradius RA = 0,54. Der halbe Kammwinkel ist α_1=0,3981 und die Summe der Kammwinkel eines Paars von Schneckenelementen ist 8*α_1=3,1847.

Die Figur 1b zeigt beispielhaft ein Paar von Schneckenelementen, ausgebildet als Förderelemente, deren Schneckenprofil auf Figur 1a basiert. Das Spiel zwischen den beiden Förderelementen beträgt S = 0,008. Das Spiel zwischen den beiden Förderelementen und dem Gehäuse beträgt D = 0,004. Die Steigung der Förderelemente beträgt T = 1,08. Die Länge der Förderelemente beträgt 0,54, was einer Drehung der Schneckenprofile um einen Winkel von n entspricht. Das Gehäuse wird durch dünne, durchgezogene Linien links und rechts der beiden Förderelemente dargestellt. Auf den Oberflächen der beiden Förderelemente ist ferner ein mögliches Rechengitter dargestellt, welches zur Berechnung der Strömung in Zwei- und Mehrwellenextrudern verwendet werden kann. Die Anzahl der Gitterelemente in Umfangsrichtung ist gleich 160 und in Axialrichtung gleich 80.

Die Figur 1c zeigt eine Draufsicht auf das Paar von Schneckenelementen nach Figur 1b. Das freie Volumen zwischen den Förderelementen und dem Gehäuse ist mit einem möglichen Rechengitter versehen, welches zur Berechnung der Strömung in Zwei- und Mehrwellenextrudern verwendet werden kann. Die Anzahl der Gitterelemente in Umfangsrichtung ist gleich 160 und in Radialrichtung gleich 6. Die Drehachsen der beiden Schneckenelemente sind durch kleine Kreise markiert.

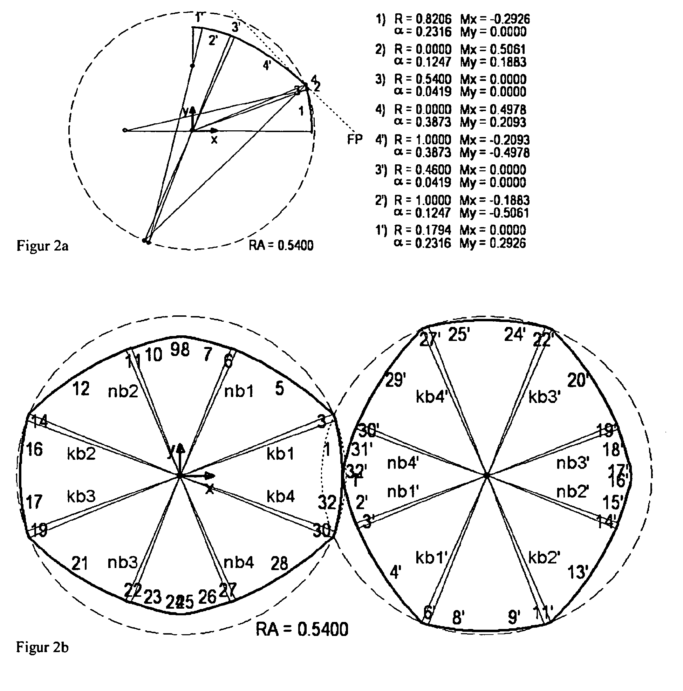

Figur 2: Die Figur 2a zeigt ein Viertel eines bevorzugten Schneckenprofils eines erfindungsgemä-βen Schneckenelements, welches aus 8 Kreisbögen aufgebaut ist. Der dimensionslose Schneckenaußenradius beträgt RA = 0,54. Der Radius R_1 ist gleich 0,8206. Der maximale dimensionslose Abstand des Kreisbogens 1 vom Schneckenaußenradius berechnet sich zu RA-(Mx+R_1)=0,54-(-0,2926+0,8206)=0,012. Die Summe der Kammwinkel α_1 und α_2 ist gleich 0,3563. Der Kammbereich ist durch den Kreisbogen 3 gegeben, der auf dem Schneckenaußenradius liegt. Der Kammwinkel α_3 ist gleich 0,0419. Der Nutbereich ist durch den Kreisbogen 3' gegeben, der auf dem Kernradius liegt. Der Nutwinkel α_3' ist gleich 0,0419. Die Summe der Kammwinkel aller Kammbereiche für ein Paar von erfindungsgemäßen Schneckenelementen beträgt 8*0,0419 =0,3352 und damit nur etwa das 0,105-fache der Summe der Kammwinkel eines Paars von Schneckenelementen mit einem zweigängigen Erdmenger-Schneckenprofil. Die Hälfte eines Bereichs, der aus Flanken- und Nutbereichen besteht, ist durch die Kreisbögen 4, 4', 3', 2' und 1' gegeben. Die doppelte Summe der dazugehörigen Flanken- und Nutwinkel beträgt 2,3456 und ist größer als 2*π/3.

Die Figur 2b zeigt einen Schnitt eines Paars von erfindungsgemäßen Schneckenelementen senkrecht zu den Drehachsen, dessen Schneckenprofil auf der Figur 2a basiert. Durch Spiegelung des Schneckenprofils aus Figur 2a an der x-Achse und durch anschließende Spiegelung des Schneckenprofils aus Figur 2a und des an der x-Achse gespiegelten Schneckenprofils aus Figur 2a an der y-Achse erhält man ein erzeugendes Schneckenprofil eines Paars von erfindungsgemäßen Schneckenelementen. Durch Rotation des erzeugenden Schneckenprofils um π/2 und durch anschließendes Verschieben um A längs der x-Achse erhält man das erzeugte Schneckenprofil.

Aus dem erzeugenden Schneckenprofil folgt das erzeugte Schneckenprofil. Erzeugendes und erzeugtes Schneckenprofil sind gegenseitig tauschbar.

Das Schneckengehäuse, welches sich aus zwei gegenseitig durchdringenden Bohrungen mit jeweils dem Radius RA=0,54 und dem Abstand A=1 ergibt, wird durch eine dünne, gestrichelte Linie dargestellt. Innerhalb der Durchdringung der beiden Gehäusebohrungen werden die beiden Bohrungen durch dünne, gepunktete Linien charakterisiert. Die Mittelpunkte der beiden Gehäusebohrungen sind identisch mit den beiden Drehpunkten der Schneckenprofile und sind jeweils durch einen kleinen Kreis gekennzeichnet. Die Kreisbögen der Schneckenprofile werden durch eine dicke, durchgezogene Linie gekennzeichnet. Die Kreisbögen des linken Schneckenprofils, des erzeugenden Schneckenprofils, sind fortlaufend durchnummeriert (1 - 32), wobei aus Gründen der Übersichtlichkeit die Nummern der Kreisbögen 2, 4, 13, 15, 18, 20, 29 und 31 weggelassen werden. Die Kreisbögen 2, 4, 13, 15, 18, 20, 29 und 31 besitzen jeweils den Radius 0. Die Kreisbögen des rechten Schneckenprofils, des erzeugten Schneckenprofils, sind fortlaufend durchnummeriert (1' - 32'), wobei aus Gründen der Übersichtlichkeit die Nummern der Kreisbögen 5', 7', 10', 12', 21', 23', 26' und 28' weggelassen werden.. Die Kreisbögen 5', 7', 10', 12', 21', 23', 26' und 28' besitzen jeweils den Radius 0. Anfang und Ende eines Kamm- oder Nutbereichs des erzeugenden und des erzeugten Schneckenprofils sind durch dünne, durchgezogene Linien charakterisiert.

Jeder Kreisbogen i des erzeugenden Schneckenprofils korrespondiert mit einem Kreisbogen i' des erzeugten Schneckenprofils. Der Radius eines Kreisbogens i' berechnet sich aus der Differenz von Achsabstand minus des Radius des Kreisbogens i, also R_i'=A-R_i. Der Winkel eines Kreisbogens i' ist gleich dem Winkel eines Kreisbogens i, also α_1'=α_i. Daraus folgt, dass ein Kammbereich des erzeugenden Schneckenprofils gleich einem Nutbereich des erzeugten Schneckenprofils ist. Daraus folgt ferner, dass ein Nutbereich des erzeugenden Schneckenprofils gleich einem Kammbereich des erzeugten Schneckenprofils ist.

Das erzeugende Schneckenprofil besteht aus den 4 Kammbereichen kb1, kb2, kb3 und kb4. Das erzeugte Schneckenprofil besteht aus den 4 Nutbereichen nb1', nb2', nb3' und nb4', die mit den 4 Kammbereichen des erzeugenden Schneckenprofils korrespondieren. Der Kammbereich kb1 besteht aus dem Kreisbogen 3. Der Kammbereich kb2 besteht aus dem Kreisbogen 14. Der Kammbereich kb3 besteht aus dem Kreisbogen 19. Der Kammbereich kb4 besteht aus dem Kreisbogen 30. Der Nutbereich nb1' besteht aus dem Kreisbogen 3'. Der Nutbereich nb2' besteht aus dem Kreisbogen 14'. Der Nutbereich nb3' besteht aus dem Kreisbogen 19'. Der Nutbereich nb4' besteht aus dem Kreisbogen 30'.

Das erzeugende Schneckenprofil besteht aus den 4 Nutbereichen nb1, nb2, nb3 und nb4. Das erzeugte Schneckenprofil besteht aus den 4 Kammbereichen kb1', kb2', kb3' und kb4', die mit den 4 Nutbereichen des erzeugenden Schneckenprofils korrespondieren. Der Nutbereich nb1 besteht aus dem Kreisbogen 6. Der Nutbereich nb2 besteht aus dem Kreisbogen 11. Der Nutbereich nb3 besteht aus dem Kreisbogen 22. Der Nutbereich nb4 besteht aus dem Kreisbogen 27. Der Kammbereich kb1' besteht aus dem Kreisbogen 6'. Der Kammbereich kb2' besteht aus dem Kreisbogen 11'. Der Kammbereich kb3' besteht aus dem Kreisbogen 22'. Der Kammbereich kb4' besteht aus dem Kreisbogen 27'.

In Summe beträgt die Anzahl der Kammbereiche des in Figur 2b gezeigten Paars von erfindungsgemäßen Schneckenelementen 8 und ist erfindungsgemäß größer als 4. Die Summe der Kammwinkel aller Kammbereiche beträgt 8*0,0419=0,3352 und damit nur etwa das 0,105-fache der Summe der Kammwinkel eines Paars von Schneckenelementen mit einem zweigängigen Erdmenger-Schneckenprofil.

Ein erster Bereich des erzeugenden Schneckenprofils, der aus Flanken- und Nutbereichen besteht und bei dem die Summe der Flanken- und Nutwinkel größer als π/2, bevorzugt größer als 2*π/3 ist, besteht aus den Kreisbögen 4 bis 13. Die Summe der Flanken- und Nutwinkel beträgt 2,3456 und ist größer als 2*π/3. Ein zweiter Bereich des erzeugenden Schneckenprofils, der aus Flanken- und Nutbereichen besteht und bei dem die Summe der Flanken- und Nutwinkel größer als π/2, bevorzugt größer als 2*π/3 ist, besteht aus den Kreisbögen 20 bis 29. Die Summe der Flanken- und Nutwinkel beträgt 2,3456 und ist größer als 2*π/3.

Ein erster Bereich des erzeugten Schneckenprofils, der aus Flanken- und Nutbereichen besteht und bei dem die Summe der Flanken- und Nutwinkel größer als π/2, bevorzugt größer als 2*π/3 ist, besteht aus den Kreisbögen 12' bis 21'. Die Summe der Flanken- und Nutwinkel beträgt 2,3456 und ist größer als 2*π/3. Ein zweiter Bereich des erzeugten Schneckenprofils, der aus Flanken- und Nutbereichen besteht und bei dem die Summe der Flanken- und Nutwinkel größer als π/2, bevorzugt größer als 2*π/3 ist, besteht aus den Kreisbögen 28' bis 32' und 1' bis 5'. Die Summe der Flanken- und Nutwinkel beträgt 2,3456 und ist größer als 2*π/3.

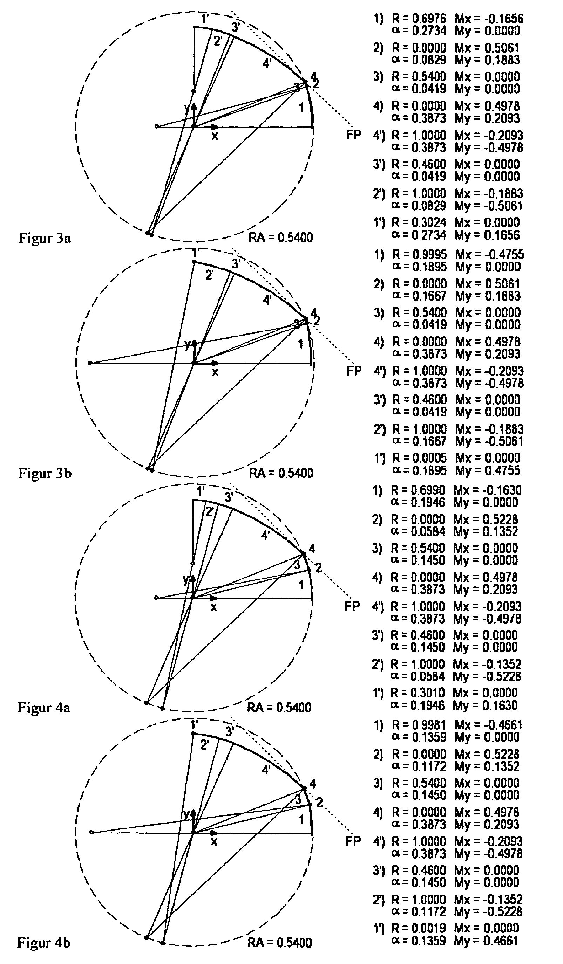

Figur 3: Die Figuren 3a und 3b zeigen jeweils ein Viertel eines weiteren bevorzugten Schneckenprofils eines erfindungsgemäßen Schneckenelements, welches jeweils aus 8 Kreisbögen aufgebaut ist. In den Figuren 3a und 3b beträgt der Schneckenaußenradius jeweils RA=0,54. Der Radius R_1 ist in Figur 3a gleich 0,6976 und in Figur 3b gleich 0,9995. In der Figur 3a berechnet sich der maximale dimensionslose Abstand des Kreisbogens 1 vom Schneckenaußenradius zu 0,008 und in der Figur 3b zu 0,016. Die Summe der Kammwinkel α_1 und α_2 ist in beiden Figuren gleich 0,3563. Der Kammbereich ist in beiden Figuren durch den Kreisbogen 3 gegeben, der jeweils auf dem Schneckenaußenradius liegt. Der Kammwinkel α_3 ist jeweils gleich 0,0419. Der Nutbereich ist in beiden Figuren jeweils durch den Kreisbogen 3' gegeben, der jeweils auf dem Kernradius liegt. Der Nutwinkel α_3' ist jeweils gleich 0,0419. Die Summe der Kammwinkel aller Kammbereiche für ein Paar von erfindungsgemäßen Schneckenelementen beträgt für die Figuren 3a und 3b jeweils 8*0,0419=0,3352 und damit nur etwa das 0,105-fache der Summe der Kammwinkel eines Paars von Schneckenelementen mit einem zweigängigen Erdmenger-Schneckenprofil. Die Hälfte eines Bereichs, der aus Flanken- und Nutbereichen besteht, ist jeweils durch die Kreisbögen 4, 4', 3', 2' und 1' gegeben. Die doppelte Summe der dazugehörigen Flanken- und Nutwinkel beträgt jeweils 2,3456 und ist größer als 2*π/3.

Durch Variation des Radius R_1 und durch Verschieben der x-Koordinate Mx_1 des Mittelpunkts des Kreisbogens 1 lässt sich der maximale dimensionslose Abstand des Kreisbogens 1 vom Schneckenaußenradius bei konstant gehaltenem Kammwinkel des Kammbereichs einstellen.

Figur 4: Die Figuren 4a und 4b zeigen jeweils ein Viertel eines weiteren bevorzugten Schneckenprofils eines erfindungsgemäßen Schneckenelements, welches jeweils aus 8 Kreisbögen aufgebaut ist. In den Figuren 4a und 4b beträgt der Schneckenaußenradius jeweils RA=0,54. Der Radius R_1 ist in Figur 4a gleich 0,6990 und in Figur 4b gleich 0,9981. In der Figur 4a berechnet sich der maximale dimensionslose Abstand des Kreisbogens 1 vom Schneckenaußenradius zu 0,004 und in der Figur 4b zu 0,008. Die Summe der Kammwinkel α_1 und α_2 ist in beiden Figuren gleich 0,2531. Der Kammbereich ist in beiden Figuren durch den Kreisbogen 3 gegeben, der jeweils auf dem Schneckenaußenradius liegt. Der Kammwinkel α_3 ist jeweils gleich 0,1450. Der Nutbereich ist in beiden Figuren jeweils durch den Kreisbogen 3' gegeben, der jeweils auf dem Kernradius liegt. Der Nutwinkel α_3' ist jeweils gleich 0,1450. Die Summe der Kammwinkel aller Kammbereiche für ein Paar von erfindungsgemäßen Schneckenelementen beträgt für die Figuren 4a und 4b jeweils 8*0,1450=1,1600 und damit nur etwa das 0,364-fache der Summe der Kammwinkel eines Paars von Schneckenelementen mit einem zweigängigen Erdmenger-Schneckenprofil. Die Hälfte eines Bereichs, der aus Flanken- und Nutbereichen besteht, ist jeweils durch die Kreisbögen 4, 4', 3', 2' und 1' gegeben. Die doppelte Summe der dazugehörigen Flanken- und Nutwinkel beträgt jeweils 2,3456 und ist größer als 2*π/3.

Durch Variation des Radius R_1 und durch Verschieben der x-Koordinate Mx_1 des Mittelpunkts des Kreisbogens 1 lässt sich der maximale dimensionslose Abstand des Kreisbogens 1 vom Schneckenaußenradius bei konstant gehaltenem Kammwinkel des Kammbereichs einstellen. Im Zusammenhang mit den Figuren 3a und 3b wird deutlich, dass auch der Kammwinkel des Kammbereichs eingestellt werden kann.

Anschaulich kann man ein Schneckenprofil eines erfindungsgemäßen Schneckenelements unter anderem dadurch erhalten, indem man die x-Koordinate Mx_1 und Radius R_1 des Kreisbogens 1 wählt und damit einen Bereich aus dem Kammbereich eines zweigängigen Erdmenger-Schneckenprofils "entfernt". Zur Gewährleistung der Selbstreinigung muss dann im Nutbereich eines zweigängigen Erdmenger-Schneckenprofils wieder ein Bereich "ergänzt" werden. Dies geschieht über die Kreisbögen 2' und 1'.

Durch die freie Wahl der Größe des Kammwinkels des Kammbereichs kann die thermische Produktbelastung bei erfindungsgemäßen Schneckenelementen gezielt eingestellt werden und gegenüber zweigängigen Erdmenger-Schneckenprofilen verringert werden. Insgesamt sinkt der Energieeintrag und der Wirkungsgrad zum Druckaufbau steigt.

Ferner sind die Figuren 3a und 4b dadurch gekennzeichnet, dass die Position des Anfangspunkts des Kreisbogens 1 und die Position des Endpunkts des Kreisbogens 1' jeweils identisch sind. Durch Spiegeln der Figur 3a an der x-Achse und durch Spiegeln der gespiegelten Figur 3a und der Figur 4b an der y-Achse und durch Zusammensetzen eines Schneckenprofils aus der Figur 4b, der an der y-Achse gespiegelten Figur 4b, der an der x- und y-Achse gespiegelten Figur 3a und der an der x-Achse gespiegelten Figur 3a ergibt sich ein Schneckenprofil eines erfindungsgemäßen Schneckenelements, bei dem die Kammwinkel der Kammbereiche unterschiedlich groß sind. Es ist zulässig, jedes Viertel eines Schneckenprofils und damit die Kammwinkel der jeweiligen Kammbereiche unabhängig voneinander zu gestalten und zu einem Schneckenprofil für erfindungsgemäße Schneckenelemente zusammenzusetzen, sofern die Anfangspunkte der Kreisbögen 1 und die Endpunkte der Kreisbögen 1' jeweils identisch sind.

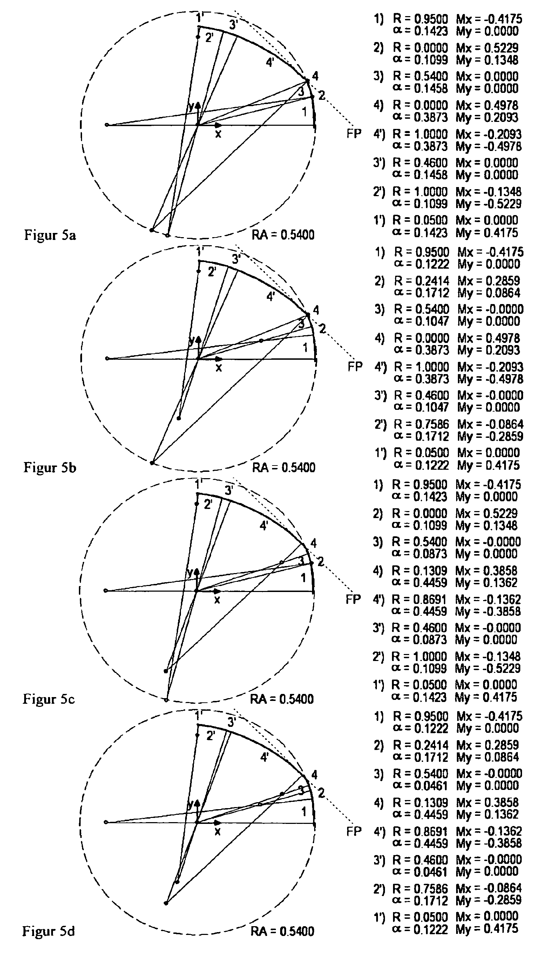

**Figur 5****:** Die Figuren 5a bis 5d zeigen jeweils ein Viertel eines weiteren bevorzugten Schneckenprofils eines erfindungsgemäßen Schneckenelements, welches jeweils aus 8 Kreisbögen aufgebaut ist. In den Figuren 5a bis 5d beträgt der Schneckenaußenradius jeweils RA=0,54. Der Radius R_1 ist in den vier Figuren jeweils gleich 0,95 und der maximale dimensionslose Abstand zum Schneckenaußenradius berechnet sich jeweils zu 0,0075. Der Kammbereich ist in den vier Figuren durch den Kreisbogen 3 gegeben, der jeweils auf dem Schneckenaußenradius liegt. Der Kammwinkel α_3 variiert zwischen 0,0461 und 0,1458. Der Nutbereich ist in den vier Figuren jeweils durch den Kreisbogen 3' gegeben, der jeweils auf dem Kernradius liegt. Der Nutwinkel α_3' variiert zwischen 0,0461 und 0,1458. Die Summe der Kammwinkel aller Kammbereiche für ein Paar von erfindungsgemäßen Schneckenelementen variiert für die Figuren 5a bis 5d zwischen 8*0,0461=0,3688 und 8*0,1458=1,1664 und beträgt damit nur etwa das 0,116-fache bis 0,366-fache der Summe der Kammwinkel eines Paars von Schneckenelementen mit einem zweigängigen Erdmenger-Schneckenprofil. Die Hälfte eines Bereichs, der aus Flanken- und Nutbereichen besteht, ist jeweils durch die Kreisbögen 4, 4', 3', 2' und 1' gegeben. Die doppelte Summe der dazugehörigen Flanken- und Nutwinkel beträgt zwischen 2,3456 und 2,4626 und ist jeweils größer als 2*π/3.

In Figur 5a beginnt und endet der Kammbereich mit einem Knick, d.h. die Kreisbögen 2 und 4 besitzen jeweils den Radius 0. In Figur 5b beginnt der Kammbereich mit einer Abrundung und endet mit einem Knick, d.h. der Kreisbogen 2 besitzt einen Radius größer 0 und der Kreisbogen 4 besitzt den Radius 0. In Figur 5c beginnt der Kammbereich mit einem Knick und endet mit einer Abrundung, d.h. der Kreisbogen 2 besitzt den Radius 0 und der Kreisbogen 4 besitzt einen Radius größer 0. In Figur 5d beginnt und endet der Kammbereich mit einer Abrundung, d.h. die Kreisbögen 2 und 4 besitzen jeweils einen Radius größer 0.

Durch Rotation um ein Einfaches oder Mehrfaches von π/2 und / oder durch Spiegelung an der x-und / oder y-Achse können die Figuren 5a bis 5d zu weiteren bevorzugten Schneckenprofilen erfindungsgemäßer Schneckenelemente zusammengesetzt werden. Damit ist es beispielsweise möglich, ein Schneckenprofil erfindungsgemäßer Schneckenelemente zu erzeugen, dessen Kammbereiche unterschiedlich groß sind. Damit ist es beispielsweise ferner möglich, ein Schneckenprofil erfindungsgemäßer Schneckenelemente zu erzeugen dessen Kammbereiche in Drehrichtung des Schneckenelements abgerundet sind oder die entgegen der Drehrichtung der Schneckenelemente abgerundet sind.

Im Folgenden soll ein Verfahren zur Erzeugung ebener, dicht kämmender, selbstreinigender und gleichsinnig drehender Schneckenprofile der Gangzahl z beispielhaft an dem Abschnitt eines Schneckenprofils in Figur 5d erläutert werden.

Das Schneckenprofil und damit auch der gezeigte Abschnitt des Schneckenprofils liegen erfindungsgemäß in einer Ebene. Der Einfachheit halber wird diese Ebene in die xy-Ebene eines kartesischen Koordinatensystems gelegt. Ebenfalls der Einfachheit halber wird der Drehpunkt des Schneckenprofils in den Ursprung des kartesischen Koordinatensystems gelegt (x=0, y=0).

Die Gangzahl z wird erfindungsgemäß so gewählt, dass z größer oder gleich 1 ist. In dem vorliegenden Beispiel wird die Gangzahl zu z=2 gewählt. Die Anzahl der Kreisbögen n des Schneckenprofils wird so gewählt, dass n ein ganzes Vielfaches p von 4*z ist. In dem vorliegendem Beispiel wird die Anzahl der Kreisbögen zu n=32 gewählt, woraus p=4 resultiert. Der dimensionslose Schneckenaußenradius RA des Schneckenprofils wird so gewählt, dass er größer 0 und kleiner oder gleich dem dimensionslosen Achsabstand A ist. In dem vorliegenden Beispiel wird der dimensionslose Sehneckenaußenradius des Schneckenprofils zu RA=0,54 gewählt. Der dimensionslose Kernradius RI des Schneckenprofils wird so gewählt, dass er größer oder gleich 0 und kleiner oder gleich dem dimensionslosen Schneckenaußenradius RA ist. In dem vorliegenden Beispiel wird der dimensionslose Kernradius des Schneckenprofils zu RI=A-RA=0,46 gewählt.

Die Kreisbögen des Schneckenprofils können im oder gegen den Uhrzeigersinn um die Drehachse des Schneckenprofils angeordnet werden. In dem vorliegenden Beispiel werden die Kreisbögen gegen den Uhrzeigersinn um die Drehachse des Schneckenprofils angeordnet.

Das Schneckenprofil wird in 2*z Abschnitte eingeteilt, die dadurch gekennzeichnet sind, dass jeder Abschnitt durch zwei Geraden begrenzt ist, die zueinander einen Winkel im Bogenmaß von π/z bilden und die sich im Drehpunkt des Schneckenprofils schneiden, wobei diese beiden Geraden als Abschnittsgrenzen bezeichnet werden. In dem vorliegenden Beispiel ergibt sich, dass das Schneckenprofil in vier Abschnitte unterteilt wird. Der Einfachheit halber werden alle Abschnittsgrenzen auf die x- und y-Achse des Koordinatensystems gelegt. In dem vorliegenden Beispiel wird im Folgenden nur der Abschnitt des Schneckenprofils betrachtet, der in positiver x- und y-Richtung liegt.

Der Abschnitt des Schneckenprofils wird in einen ersten und einen zweiten Teil untergliedert, wobei der erste Teil aus p Kreisbögen und der zweite Teil aus p' Kreisbögen besteht, wobei p'=p ist. In dem vorliegenden Beispiel ergibt sich, dass p'=4 ist. Die Kreisbögen des ersten Teils des Abschnitts des Schneckenprofils können in aufsteigender oder absteigender Reihenfolge nummeriert sein. Die Kreisbögen des zweiten Teils des Abschnitts des Schneckenprofils sind in umgekehrter Reihenfolge wie die Kreisbögen des ersten Teils des Abschnittes des Schneckenprofils nummeriert. In dem vorliegenden Beispiel werden die Kreisbögen des ersten Teils des Abschnitts des Schneckenprofils in aufsteigender Reihenfolge, die Kreisbögen des zweiten Teils des Abschnitts des Schneckenprofils dementsprechend in absteigender Reihenfolge nummeriert.

Der Winkel α_1 des 1. Kreisbogens des ersten Teils des Abschnitts des Schneckenprofils wird so gewählt, dass er im Bogenmaß größer oder gleich 0 und kleiner oder gleich π/(2*z) ist. In dem vorliegenden Beispiel wird der Winkel des 1. Kreisbogens zu α_1=0,1222 gewählt. Der dimensionslose Radius R_1 des 1. Kreisbogens des ersten Teils des Abschnitts des Schneckenprofils wird so gewählt, dass er größer oder gleich 0 und kleiner oder gleich dem Achsabstand A ist. In dem vorliegenden Beispiel wird der dimensionslose Radius des 1. Kreisbogens zu R_1=0,9500 gewählt. Die Position des 1. Kreisbogens des ersten Teils des Abschnitts des Schneckenprofils wird so gewählt, dass der 1. Kreisbogen innerhalb oder auf den Grenzen eines Kreisrings mit dem dimensionslosen Schneckenaußenradius RA und dem dimensionslosen Kernradius RI liegt, dessen Mittelpunkt auf dem Drehpunkt des Schneckenprofils liegt. Die Position wird bevorzugt durch die Positionierung des Anfangspunkts und des Mittelpunkts des 1. Kreisbogens festgelegt. Der Anfangs- und der Mittelpunkt des 1. Kreisbogens liegen auf einer der Abschnittsgrenzen, wodurch sich der Anfangspunkt aus der Position des Mittelpunkts und des dimensionslosen Radius R_1 ergibt. In dem vorliegenden Beispiel wird der Mittelpunkt des 1. Kreisbogens auf die Koordinate Mx_1=-0,4175, My_1=0,0000 gelegt und der Anfangspunkt liegt damit auf der Koordinate x=0,5325, y=0,0000.

Die Winkel α_2, ..., α_(p-1) von p-2 weiteren Kreisbögen, also von 2 weiteren Kreisbögen des ersten Teils des Abschnitts des Schneckenprofils werden so gewählt, dass sie im Bogenmaß größer oder gleich 0 und kleiner oder gleich π/(2*z) sind. In dem vorliegenden Beispiel werden die Winkel der 2 weiteren Kreisbögen zu α_2=0,1712 und α_3=0,0461 gewählt. Die dimensionslosen Radien R_2, ..., R_(p-1) der 2 weiteren Kreisbögen des ersten Teils des Abschnitts des Schneckenprofils werden so gewählt, dass sie größer oder gleich 0 und kleiner oder gleich dem dimensionslosen Achsabstand A sind. In dem vorliegenden Beispiel werden die dimensionslosen Radien der 2 weiteren Kreisbögen zu R_2=0,2414 und R_3=0,5400 gewählt. Gemäß den Anordnungsregeln werden die Kreisbögen so angeordnet, dass die Kreisbögen derart tangential ineinander übergehen, dass sich ein geschlossenes, konvexes Schneckenprofil ergibt, wobei ein Kreisbogen, dessen dimensionsloser Radius gleich 0 ist, vorzugsweise wie ein Kreisbogen behandelt wird, dessen dimensionsloser Radius gleich eps ist, wobei eps eine sehr kleine positive reelle Zahl ist, die gegen 0 strebt (eps<<1, eps→0). Aus dieser Anordnungsregel folgt, dass der Endpunkt eines Kreisbogens gleich dem Anfangspunkt seines nachfolgenden Kreisbogens ist. Der geforderte tangentiale Übergang zwischen einem ersten Kreisbogen und einem zweiten, nachfolgenden Kreisbogen wird dadurch erfüllt, dass der Mittelpunkt dieses zweiten, nachfolgenden Kreisbogens so auf die Gerade, die durch den Endpunkt und den Mittelpunkt dieses ersten Kreisbogens gegeben ist, gelegt wird, dass der Abstand des Mittelpunkts dieses zweiten, nachfolgenden Kreisbogens von dem Endpunkt dieses ersten Kreisbogens gleich dem Radius dieses zweiten, nachfolgenden Kreisbogens ist und das Schneckenprofil konvex ist. Ein Kreisbogen, dessen Radius gleich 0 ist, wird vorzugsweise wie ein Kreisbogen mit einem sehr kleinen Radius eps behandelt, wobei eps gegen 0 strebt, so dass sich der tangentiale Übergang weiterhin konstruieren lässt. Alternativ kann ein Kreisbogen, dessen Radius gleich 0 ist, so behandelt werden, dass das Schneckenprofil an der Position dieses Kreisbogens einen Knick aufweist, wobei die Größe des Knicks durch den Winkel dieses Kreisbogens gegeben ist. In dem vorliegenden Beispiel resultieren aus der beschriebenen Anordnungsregel die folgenden Positionen der Mittelpunkte der 2 weiteren Kreisbögen: Mx_2=0,2859, My_2=0,0864 und Mx_3=0,0000, My_3=0,0000. Der 3. Kreisbogen liegt auf dem dimensionslosen Schneckenaußenradius RA und die Anordnungsregel, dass mindestens ein Kreisbogen den dimensionslosen Schneckenaußenradius RA berührt, ist erfüllt.

Der Winkel α_4 des letzten Kreisbogens des ersten Teils des Abschnitts des Schneckenprofils ergibt sich erfindungsgemäß daraus, dass die Summe der Winkel der 4 Kreisbögen des ersten Teils des Abschnitts des Schneckenprofils im Bogenmaß gleich π/(2*z) ist, wobei der Winkel α_4 im Bogenmaß größer oder gleich 0 und kleiner oder gleich π/(2*z) ist. In dem vorliegenden Beispiel ergibt sich der Winkel dieses letzten Kreisbogens zu α_4=0,4459. Der dimensionslose Radius R_4 des letzten Kreisbogens des ersten Teils des Abschnitts des Schneckenprofils ergibt sich erfindungsgemäß daraus, dass der Endpunkt dieses letzten Kreisbogens eine Gerade FP in einem Punkt tangiert, wobei die Gerade FP senkrecht auf der Winkelhalbierenden der beiden Abschnittsgrenzen dieses Abschnitts steht und einen Abstand vom Drehpunkt des Schneckenprofils in Richtung dieses Abschnitts besitzt, der gleich dem halben Achsabstand ist, wobei die Winkelhalbierende wie die Abschnittsgrenzen durch den Drehpunkt des Schneckenprofils führt. Die Gerade FP ist in der Figur 5d als gepunktete Linie eingezeichnet. Der 4. Kreisbogen des ersten Teils des Abschnitts des Schneckenprofils wird konstruiert, indem am Endpunkt des 3. Kreisbogens eine Tangente an den 3. Kreisbogen gelegt wird, der Schnittpunkt der Tangente mit der Gerade FP der Mittelpunkt eines Kreises ist, dessen Radius gleich der Länge der Strecke zwischen dem Endpunkt des 3. Kreisbogens und dem Schnittpunkt der Tangente mit der Gerade FP ist, und indem der in Richtung des gewählten Uhrzeigersinns gelegene Schnittpunkt des Kreises mit der Gerade FP der gesuchte Berührpunkt des Endpunktes des 4. Kreisbogens mit der Gerade FP ist. Am Endpunkt des 4. Kreisbogens wird ein Lot auf die Gerade FP gefällt. Der Schnittpunkt dieses Lots mit der Geraden, die durch den Endpunkt und den Mittelpunkt des 3. Kreisbogens gegeben ist, ist der Mittelpunkt des 4. Kreisbogens. In dem vorliegenden Beispiel berechnet sich die Position des Mittelpunkts des 4. Kreisbogens zu Mx_4=3858, My_4=0,1362 und der dimensionslose Radius des 4. Kreisbogens ergibt sich zu R_4=0,1309.

Die Winkel α_p', ..., α_1' des zweiten Teils des Abschnitts des Schneckenprofils sind dadurch bestimmt, dass der Winkel α_j' des j'-ten Kreisbogens des zweiten Teils des Abschnitts gleich dem Winkel α_j des j-ten Kreisbogens des ersten Teils des Abschnitts ist, wobei j und j' ganze Zahlen sind, die gemeinsam alle Werte im Bereich 1 bis zur Anzahl der Kreisbögen p beziehungsweise p' durchlaufen (α_1'=α_1, ..., α_p'=α_p). In dem vorliegenden Beispiel berechnen sich die Winkel des zweiten Teils des Abschnitts zu α_1'=α_1=0,1222, α_2'=α_2=0,1712, α_3'=α_3 =0,0461 und α_4'=α_4=0,4459.

Die dimensionslosen Radien R_p', ..., R_1' des zweiten Teils des Abschnitts des Schneckenprofils sind dadurch bestimmt, dass die Summe des dimensionslosen Radius R_j' des j'-ten Kreisbogens des zweiten Teils eines Abschnitts und des dimensionslosen Radius R_j des j-ten Kreisbogens des ersten Teils eines Abschnitts gleich dem dimensionslosen Achsabstand A ist, wobei j und j' ganze Zahlen sind, die gemeinsam alle Werte im Bereich 1 bis zur Anzahl der Kreisbögen p beziehungsweise p' durchlaufen (R_1'+R_1=A=1, ..., R_p'+R_p=A=1). In dem vorliegenden Beispiel berechnen sich die dimensionslosen Radien des zweiten Teils des Abschnitts zu R_1'=A-R_1 =0,0500, R_2'=A-R_2=0,7586, R_3'=A-R_3=0,4600 und R_4'=A-R_4=0,8691.

Die Position der Kreisbögen des zweiten Teils des Abschnitts des Schneckenprofils ergibt sich erfindungsgemäß daraus, das die Kreisbögen tangential ineinander übergehen und das Schneckenprofil konvex ist. In dem vorliegenden Beispiel ergeben sich die nachfolgenden Koordinaten für die Mittelpunkte der 4 Kreisbögen des zweiten Teil des Abschnitts des Schneckenprofils: Mx_1' =0,0000, My_1'=0,4175, Mx_2'=-0,0864, My_2'=-0,2859, Mx_3'=0,0000, My_3'=0,0000 und Mx_4'=-0,1362, My_4'=-0,3858. Der 3. Kreisbogen des zweiten Teils des Abschnitts des Schneckenprofils liegt auf dem dimensionslosen Kernradius RI und die Anordnungsregel, dass mindestens ein Kreisbogen den dimensionslosen Kernradius RI berührt, ist erfüllt.

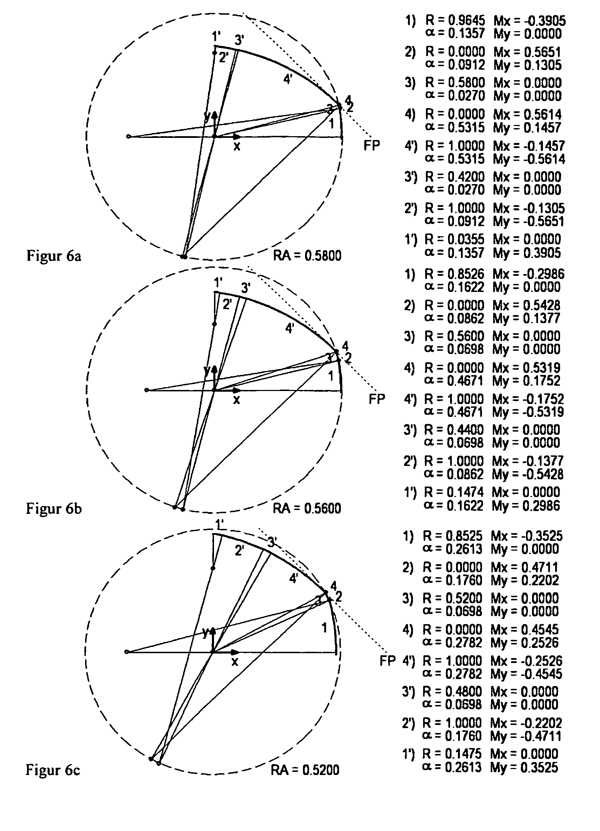

**Figur 6****:** Die Figuren 6a bis 6c zeigen jeweils ein Viertel eines weiteren bevorzugten Schneckenprofils eines erfindungsgemäßen Schneckenelements, welches jeweils aus 8 Kreisbögen aufgebaut ist. In der Figur 6a beträgt der Schneckenaußenradius RA=0,58, in der Figur 6b gilt RA=0,56 und in der Figur 6c ist RA=0,52. Der maximale dimensionslose Abstand des Kreisbogens 1 vom Schneckenaußenradius variiert in den Figuren 6a bis 6c zwischen 0,006 und 0,02. Der Kammbereich ist in den drei Figuren durch den Kreisbogen 3 gegeben, der jeweils auf dem Schneckenaußenradius liegt. Der Kammwinkel α_3 variiert zwischen 0,0270 und 0,0698. Der Nutbereich ist in den vier Figuren jeweils durch den Kreisbogen 3' gegeben, der jeweils auf dem Kernradius liegt. Der Nutwinkel α_3' variiert zwischen 0,0270 und 0,0698. Die Summe der Kammwinkel aller Kammbereiche für ein Paar von erfindungsgemäßen Schneckenelementen variiert für die Figuren 6a bis 6c zwischen 8*0,0270=0,2160 (RA=0,58) und 8*0,0698=0,5584 (RA=0,56) und beträgt damit nur etwa das 0,106-fache (RA=0,58) bis 0,219-fache (RA=0,56) der Summe der Kammwinkel eines Paars von Schneckenelementen mit einem zweigängigen Erdmenger-Schneckenprofil mit entsprechendem Schneckenaußenradius. Die Hälfte eines Bereichs, der aus Flanken- und Nutbereichen besteht, ist jeweils durch die Kreisbögen 4, 4', 3', 2' und 1' gegeben. Die doppelte Summe der dazugehörigen Flanken- und Nutwinkel beträgt zwischen 2,1272 (RA=0,52) und 2,6338 (RA=0,58) und ist jeweils größer als 2*π/3.

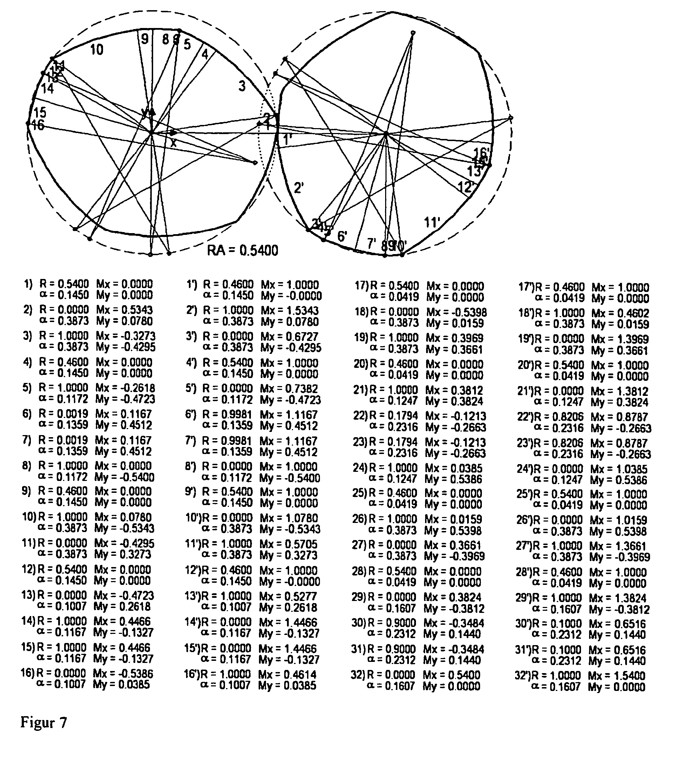

Figur 7: Die Figur 7 zeigt einen Schnitt senkrecht zu den Drehachsen eines bevorzugten Paars von erfindungsgemäßen Schneckenelementen mit asymmetrischen Schneckenprofilen. Das Schneckengehäuse, welches sich aus zwei gegenseitig durchdringenden Bohrungen mit jeweils dem Radius RA=0,54 und dem Abstand A=1 ergibt, wird durch eine dünne, gestrichelte Linie dargestellt. Innerhalb der Durchdringung der beiden Gehäusebohrungen werden die beiden Bohrungen durch dünne, gepunktete Linien charakterisiert. Die Mittelpunkte der beiden Gehäusebohrungen sind identisch mit den beiden Drehpunkten der Schneckenprofile und sind jeweils durch einen kleinen Kreis gekennzeichnet. Die jeweils 32 Kreisbögen der beiden Schneckenprofile werden durch eine dicke, durchgezogene Linie gekennzeichnet. Die Kreisbögen des linken Schneckenprofils, des erzeugenden Schneckenprofils, sind fortlaufend durchnummeriert (1 - 16), wobei aus Gründen der Übersichtlichkeit die Nummern der Kreisbögen 17 bis 32 weggelassen werden. Die Kreisbögen des rechten Schneckenprofils, des erzeugten Schneckenprofils, sind fortlaufend durchnummeriert (1' - 16'), wobei aus Gründen der Übersichtlichkeit die Nummern der Kreisbögen 17' bis 32' weggelassen werden. Die Mittelpunkte der jeweils ersten 16 Kreisbögen werden durch kleine Kreise dargestellt. Die Mittelpunkte dieser jeweils ersten 16 Kreisbögen sind mit dünnen, durchgezogenen Linien sowohl mit dem Anfangspunkt als auch mit dem Endpunkt des dazugehörigen Kreisbogens verbunden. Unterhalb der Figur werden zu jedem Kreisbogen der Radius R, der Winkel α und die x- und y-Koordinate des Kreisbogenmittelpunkts Mx und My jeweils auf vier signifikante Stellen angegeben. Durch diese Angaben ist das Schneckenprofil eindeutig definiert.

Trotz Reduzierung der ausführlich dargestellten Kreisbögen auf 16 pro Schneckenprofil kann es bedingt durch Erzeugung der Figuren mittels eines Computerprogramms teilweise zu einer Überlappung der Nummern der Kreisbögen kommen, siehe zum Beispiel die Kreisbögen 6 und 7 und die Kreisbögen 14' und 15'. Trotz der teilweisen schlechten Lesbarkeit einzelner Nummern, wird der Aufbau der Profile aus dem Zusammenhang in Verbindung mit dieser Beschreibung dennoch deutlich.

Das erzeugende Schneckenprofil besteht aus 4 Kammbereichen. Die Kammbereiche des erzeugenden Schneckenprofils bestehen aus den Kreisbögen 1, 12, 17 und 28. Der Flankenbereich zwischen den beiden Kammbereichen, die zu den Kreisbögen 1 und 28 gehören, ist größer als der Flankenbereich zwischen den beiden Kammbereichen, die zu den Kreisbögen 12 und 17 gehören. Das erzeugte Schneckenprofil besteht aus den 4 Nutbereichen, die mit den 4 Kammbereichen des erzeugenden Schneckenprofils korrespondieren. Die Nutbereiche des erzeugten Schneckenprofils bestehen aus den Kreisbögen 1', 12', 17' und 28'.

Das erzeugende Schneckenprofil besteht aus 4 Nutbereichen. Das erzeugte Schneckenprofil besteht aus den 4 Kammbereichen, die mit den 4 Nutbereichen des erzeugenden Schneckenprofils korrespondieren. Die Nutbereiche des erzeugenden Schneckenprofils bestehen aus den Kreisbögen 4, 9, 20 und 25. Die Kammbereiche des erzeugten Schneckenprofils bestehen aus den Kreisbögen 4', 9', 20' und 25'.

In Summe beträgt die Anzahl der Kammbereiche des in Figur 7 gezeigten Paars von erfindungsgemäßen Schneckenelementen 8 und ist erfindungsgemäß größer als 4. Die Summe der Kammwinkel aller Kammbereiche beträgt 4*0,0419+4*0,1450=0,7476 und damit nur etwa das 0,235-fache der Summe der Kammwinkel eines Paars von Schneckenelementen mit einem zweigängigen Erdmenger-Schneckenprofil mit entsprechendem Schneckenaußenradius.

Ein erster Bereich des erzeugenden Schneckenprofils, der aus Flanken- und Nutbereichen besteht und bei dem die Summe der Flanken- und Nutwinkel größer als π/2, bevorzugt größer als 2*π/3 ist, besteht aus den Kreisbögen 2 bis 11. Die Summe der Flanken- und Nutwinkel beträgt 2,3456 und ist größer als 2*π/3. Ein zweiter Bereich des erzeugenden Schneckenprofils, der aus Flanken- und Nutbereichen besteht und bei dem die Summe der Flanken- und Nutwinkel größer als π/2, bevorzugt größer als 2*π/3 ist, besteht aus den Kreisbögen 18 bis 27. Die Summe der Flanken- und Nutwinkel beträgt 2,3456 und ist größer als 2*π/3.

Ein erster Bereich des erzeugten Schneckenprofils, der aus Flanken- und Nutbereichen besteht und bei dem die Summe der Flanken- und Nutwinkel größer als π/2, bevorzugt größer als 2*π/3 ist, besteht aus den Kreisbögen 10' bis 19'. Die Summe der Flanken- und Nutwinkel beträgt 2,1709 und ist größer als 2*π/3. Ein zweiter Bereich des erzeugten Schneckenprofils, der aus Flanken- und Nutbereichen besteht und bei dem die Summe der Flanken- und Nutwinkel größer als π/2, bevorzugt größer als 2*π/3 ist, besteht aus den Kreisbögen 26' bis 32' und 1' bis 3'. Die Summe der Flanken- und Nutwinkel beträgt 2,5199 und ist größer als 2*π/3.

Anschaulich kann man ein Schneckenprofil eines erfindungsgemäßen Schneckenelements nach Figur 7 unter anderem folgendermaßen erhalten: Der Flanken- und Nutbereich eines ersten Viertels eines (symmetrischen) Schneckenprofils wird an der y-Achse gespiegelt. Der Flanken- und Nutbereich eines zweiten Viertels eines (symmetrischen) Schneckenprofils wird an der y-Achse gespiegelt und im Bereich von n bis π-[π/2-2*arccos(0,5*A/RA)] in oder gegen den Uhrzeigersinn um den Drehpunkt des Schneckenprofils gedreht. Der Term in den eckigen Klammern ist gleich dem Kammwinkel eines Schneckenelements mit einem zweigängigen Erdmenger-Schneckenprofil.

In der Figur 7 wird ein Flanken- und Nutbereich eines ersten Viertels nach Figur 4b gewählt. Die Kreisbögen 2, 3, 4, 5 und 6 aus Figur 7 entsprechen den Kreisbögen 4, 4', 3', 2' und 1' aus Figur 4b. Der Flanken- und Nutbereich eines zweiten Viertels basiert auf Figur 2a. Die Kreisbögen 18, 19, 20, 21 und 22 entsprechen den Kreisbögen 4, 4', 3', 2' und 1' aus Figur 2a. Die Bereiche zwischen den beiden Flanken- und Nutbereichen werden durch einen Kammbereich oder durch eine Abfolge von Kamm- und Flankenbereichen, bevorzugt durch eine Abfolge von Kammbereich - Flankenbereich - Kammbereich derart ergänzt, dass sich ein geschlossenes Schneckenprofil ergibt. Derartige Bereiche werden im Folgenden als Schließbereiche bezeichnet. Der Winkel zwischen dem Anfangs- und dem Endpunkt eines Schließbereichs bezogen auf den Drehpunkt des Schneckenprofils wird als Schließwinkel bezeichnet.

In Figur 7 besteht ein erster Schließbereich, der aus Kamm- und Flankenbereichen besteht, aus den Kreisbögen 12, 13, 14, 15, 16 und 17. Ein zweiter Schließbereich besteht aus den Kreisbögen 28, 29, 30, 31, 32 und 1. Durch das Drehen eines zweiten Viertels eines Schneckenprofils um weniger oder mehr als n ergibt sich, dass die beiden Schließbereiche zwischen den beiden Bereichen, die aus Flanken- und Nutbereichen bestehen, ungleich groß sind. Die Drehung erfolgt um einen Winkel, so dass der Schließwinkel eines der beiden Schließbereiche bevorzugt größer als der 1,2-fache, besonders bevorzugt größer als der 1,6-fache Kammwinkel eines zweigängigen Erdmenger-Schneckenprofils mit entsprechendem Schneckenaußenradius ist und am meisten bevorzugt größer ist als der Gehäuseöffnungswinkel, der sich durch 2*arccos(0,5*A/RA) berechnet. In diesen Fällen besteht der zweite der beiden Schließbereiche besonders bevorzugt aus einem Kammbereich, wodurch dieses Schneckenprofil aus insgesamt 3 Kammbereichen besteht.

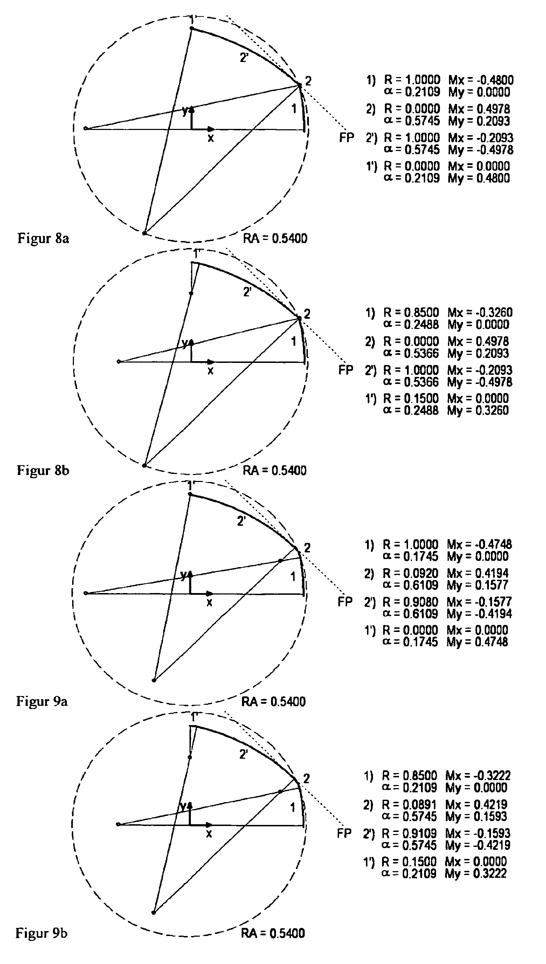

**Figur 8****:** Die Figuren 8a und 8b zeigen jeweils ein Viertel eines bevorzugten Schneckenprofils eines erfindungsgemäßen Schneckenelements, welches jeweils aus 4 Kreisbögen aufgebaut ist. Der Schneckenaußenradius beträgt in beiden Figuren RA=0,54. Der maximale dimensionslose Abstand des Kreisbogens 1 vom Schneckenaußenradius berechnet sich in der Figur 8a zu 0,02 und in der Figur 8b zu 0,016. Der Kammbereich ist in den beiden Figuren durch den Kreisbogen 2 gegeben, der jeweils auf dem Schneckenaußenradius liegt. Der Kammwinkel α_2 ist jeweils gleich 0. Der Nutbereich ist jeweils durch den Berührpunkt des Kreisbogens 2' mit dem Kernradius gegeben. Der Berührpunkt ist gleich dem Schnittpunkt des Kreisbogens 2' mit einer Gerade, die durch den Mittelpunkt des Kreisbogens 2' und dem Drehpunkt des Schneckenprofils (Koordinatenursprung) bestimmt ist. Der Nutwinkel ist jeweils gleich 0. Die Summe der Kammwinkel aller Kammbereiche für ein Paar von erfindungsgemäßen Schneckenelementen beträgt für die Figuren 8a und 8b jeweils 0.

Die Hälfte eines Bereichs, der aus Flanken- und Nutbereichen besteht, ist jeweils durch die Kreisbögen 2, 2' und 1' gegeben. Derartige Bereiche werden im Folgenden als Kanalbereiche bezeichnet. Der Winkel zwischen dem Anfangs- und dem Endpunkt eines Kanalbereichs bezogen auf den Drehpunkt des Schneckenprofils wird als Kanalwinkel bezeichnet. Die Hälfte eines Schließbereichs ist durch die Kreisbögen 1 und 2 gegeben.

Der Kreisbogen 2 gehört sowohl zum Schließbereich als auch zum Kanalbereich. Die Aufteilung des Winkels des Kreisbogens 2 auf den Schließbereich und den Kanalbereich erfolgt dadurch, dass man sich den Kreisbogen 2 als Kreisbogen mit Radius EPS (EPS<<1, EPS→0) vorstellt und diesen Kreisbogen mit einer Gerade schneidet, die durch den Mittelpunkt des Kreisbogens 2 und den Drehpunkt des Schneckenprofils gegeben ist. Der Teil des Kreisbogens 2 und damit der Teil des Winkels des Kreisbogens 2, der unterhalb des Schnittpunkts liegt, gehört zum Schließbereich, der andere Teil gehört zum Kanalbereich. Die Gerade, die durch den Mittelpunkt des Kreisbogens 2 und durch den Drehpunkt des Schneckenprofils führt, besitzt in beiden Figuren jeweils den Steigungswinkel arctan(My_2/Mx_2)=0,3980. Der Summenwinkel des gesamten Kanalbereichs beträgt jeweils π-2*Steigungswinkel=2,3456 und ist jeweils größer als 2*π/3.

Charakteristisch für die Figuren 8a und 8b ist, dass der Kammbereich und der Nutbereich jeweils durch einen Punkt auf dem Schneckenaußenradius bzw. dem Kernradius gegeben ist. Die Schneckenprofile weisen an dem Berührpunkt des Schneckenaußenradius einen Knick auf, d.h. der Kreisbogen 2 besitzt jeweils den Radius 0.

**Figur 9****:** Die Figuren 9a und 9b zeigen jeweils ein Viertel eines weiteren bevorzugten Schneckenprofils eines erfindungsgemäßen Schneckenelements, welches jeweils aus 4 Kreisbögen aufgebaut ist. Der Schneckenaußenradius beträgt in beiden Figuren RA=0,54. Der maximale dimensionslose Abstand des Kreisbogens 1 vom Schneckenaußenradius berechnet sich in der Figur 9a zu 0,0148 und in der Figur 9b zu 0,0122. Der Kammbereich in den beiden Figuren ist jeweils durch den Berührpunkt des Kreisbogens 2 mit dem Schneckenaußenradius gegeben. Der Berührpunkt ist gleich dem Schnittpunkt des Kreisbogens 2 mit einer Gerade, die durch den Mittelpunkt des Kreisbogens 2 und dem Drehpunkt des Schneckenprofils (Koordinatenursprung) bestimmt ist. Der Kammwinkel ist jeweils gleich 0. Der Nutbereich ist jeweils durch den Berührpunkt des Kreisbogens 2' mit dem Kernradius gegeben. Der Berührpunkt ist gleich dem Schnittpunkt des Kreisbogens 2' mit einer Gerade, die durch den Mittelpunkt des Kreisbogens 2' und dem Drehpunkt des Schneckenprofils (Koordinatenursprung) bestimmt ist. Der Nutwinkel ist jeweils gleich 0. Die Summe der Kammwinkel aller Kammbereiche für ein Paar von erfindungsgemäßen Schneckenelementen beträgt für die Figuren 9a und 9b jeweils 0.

Die Hälfte eines Kanalbereichs ist jeweils durch einen Teil des Kreisbogens 2 sowie die Kreisbögen 2' und 1' gegeben. Die Gerade, die durch den Mittelpunkt des Kreisbogens 2 und durch den Drehpunkt des Schneckenprofils führt, besitzt in der Figur 9a den Steigungswinkel arctan(My_2 /Mx_2)=0,3597 und in der Figur 9b den Steigungswinkel 0,3610. Der Summenwinkel des gesamten Kanalbereichs beträgt in Figur 9a π-2*Steigungswinkel=2,4223 und in Figur 9b 2,4195 und ist jeweils größer als 2*π/3.

Charakteristisch für die Figuren 9a und 9b ist, dass der Kammbereich und der Nutbereich jeweils durch einen Punkt auf dem Schneckenaußenradius bzw. dem Kernradius gegeben ist. Die Schneckenprofile weisen an dem Berührpunkt des Schneckenaußenradius keinen Knick auf, d.h. der Kreisbogen 2 besitzt jeweils einen Radius größer 0. Der Kreisbogen 2 tangiert also den Schneckenaußenradius.

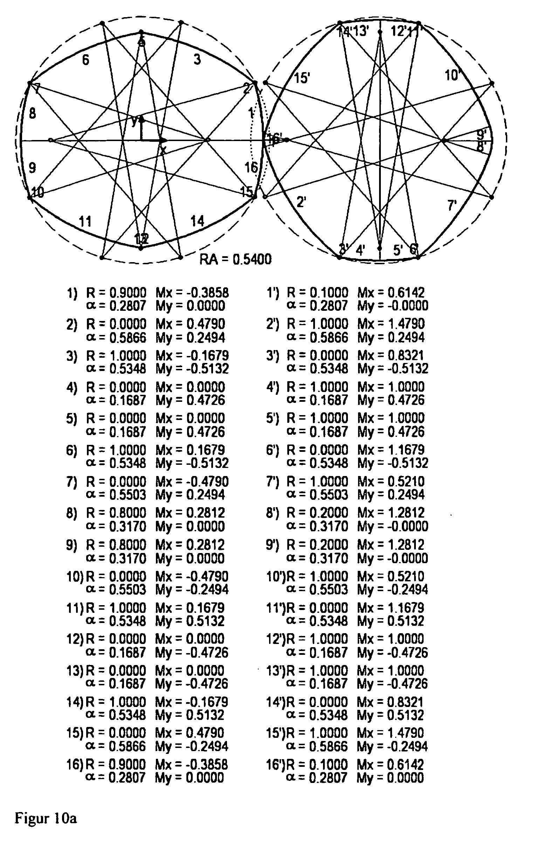

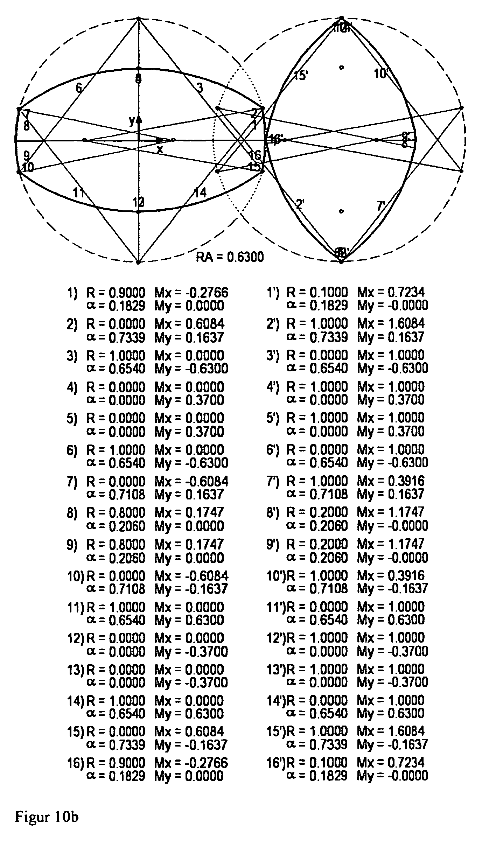

**Figur 10****:** Die Figuren 10a und 10b zeigen weitere bevorzugte Schneckenprofile erfindungsgemäßer Schneckenelemente, deren Summe der Kammwinkel aller Kammbereiche gleich 0 ist. Der Aufbau der Figuren erfolgt analog der Figur 7 und ist dort bereits ausführlich erläutert worden. Der Schneckenaußenradius beträgt in der Figur 10a RA=0,54 und in der Figur 10b RA=0,63.

Die Kammbereiche des linken Schneckenprofils, des erzeugenden Schneckenprofils bestehen jeweils aus den Kreisbögen 2, 7, 10 und 15. Die Kammbereiche des rechten Schneckenprofils, des erzeugten Schneckenprofils bestehen jeweils aus den Kreisbögen 3', 6', 11' und 14'. In Figur 10b ist die Besonderheit gezeigt, dass die Kreisbögen 3' bis 6' sowie 11' bis 14' ineinander fallen und das erzeugte Schneckenprofil nur zwei Kammbereiche aufweist und das Paar von Schneckenelementen insgesamt nur sechs Kammbereiche aufweist.

Ein erster Kanalbereich des erzeugenden Schneckenprofils ist jeweils durch die Kreisbögen 2, 3, 4, 5, 6 und 7 gegeben. Ein zweiter Kanalbereich des erzeugenden Schneckenprofils ist jeweils durch die Kreisbögen 10, 11, 12, 13, 14 und 15 gegeben. Ein erster Schließbereich zwischen den beiden Kanalbereichen des erzeugenden Schneckenprofils ist durch die Kreisbögen 7, 8, 9 und 10 gegeben. Ein zweiter Schließbereich zwischen den beiden Kanalbereichen des erzeugenden Schneckenprofils ist durch die Kreisbögen 15, 16, 1 und 2 gegeben.

Die Kreisbögen 2, 7, 10 und 15 gehören jeweils sowohl zum Kanalbereich als auch zum Schließbereich. Die Aufteilung des Winkels dieser Kreisbögen auf den Kanal- und den Schließbereich ist bereits in Figur 8 erläutert worden. Die Schließwinkel beider Schließbereiche des erzeugenden Schneckenprofils betragen in Figur 10a jeweils 0,9600. Der Schließwinkel des Schließbereichs beträgt damit etwa das 1,206-fache des Kammwinkels eines zweigängigen Erdmenger-Schneckenprofils mit entsprechendem Schneckenaußenradius. Die Schließwinkel beider Schließbereiche des erzeugenden Schneckenprofils betragen in Figur 10b jeweils 0,5257. Der Schließwinkel des Schließbereichs beträgt damit das 2,000-fache des Kammwinkels eines zweigängigen Erdmenger-Schneckenprofils mit entsprechendem Schneckenaußenradius.

Die beiden Schließwinkel der Schließbereiche eines Schneckenprofils eines Paars von erfindungsgemäßen Schneckenelementen sind bevorzugt jeweils größer als der 1,2-fache, besonders bevorzugt jeweils größer als der 1,6-fache Kammwinkel eines zweigängigen Erdmenger-Schneckenprofils mit entsprechendem Schneckenaußenradius. In diesen Fällen bestehen die Schließbereiche des korrespondierenden Schneckenprofils bevorzugt aus einem Kammbereich.

In den Figuren sind Schneckenprofile mit einem Schneckenradius von 0,52, 0,54, 0,56, 0,58 und 0,63 gezeigt worden. Der Schneckenaußenradius ist keinesfalls auf die gezeigten Werte limitiert. Vielmehr liegt der Schneckenradius bevorzugt im Bereich von 0,51 bis 0,66 und besonders bevorzugt im Bereich von 0,52 bis 0,575.

In den Figuren sind Schneckenprofile gezeigt worden, bei denen ein Viertel eines Schneckenprofils aus 4 oder 8 Kreisbögen besteht oder bei denen ein vollständiges Schneckenprofil aus 16 oder 32 Kreisbögen besteht. Die Anzahl der Kreisbögen ist keinesfalls auf die gezeigten Werte limitiert. Vielmehr besteht ein Viertel eines Schneckenprofils aus mindestens 2 Kreisbögen und ein vollständiges Schneckenprofil aus mindestens 6 Kreisbögen. Die Anzahl der Kreisbögen, aus denen ein Schneckenprofil oder ein Teil eines Schneckenprofils besteht, ist nach oben nicht begrenzt.

Überraschend wurde gefunden, dass Schneckenprofile eines Paars von erfindungsgemäßen Schneckenelementen durch eine definierte Abfolge von Kamm-, Flanken- und Nutbereichen erzeugt werden können. Gegenstand der Erfindung sind daher neuartige Schneckenelemente für mehrwellige Schneckenmaschinen, dadurch gekennzeichnet dass ein erzeugendes und ein erzeugtes Schneckenprofil eine Abfolge von Kanalbereich - Schließbereich - Kanalbereich - Schließbereich aufweisen. Unter Kanalbereich wird eine Abfolge von Flanken- und Nutbereichen verstanden, bevorzugt eine Abfolge von Flankenbereich - Nutbereich - Flankenbereich - Nutbereich - Flankenbereich, besonders bevorzugt eine Abfolge von Flankenbereich - Nutbereich - Flankenbereich. Unter Schließbereich wird ein Kammbereich verstanden oder bevorzugt eine Abfolge von Kamm-und Flankenbereichen verstanden, besonders bevorzugt eine Abfolge von Kammbereich - Flankenbereich - Kammbereich.

Alle in den Figuren gezeigten Schneckenprofile lassen sich in eine Abfolge von Kanalbereich - Schließbereich - Kanalbereich - Schließbereich untergliedern.

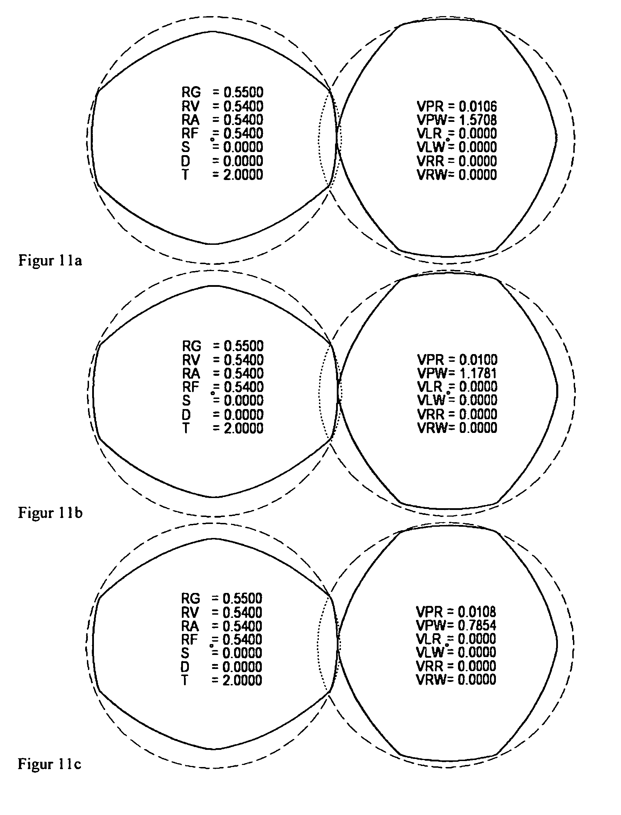

Die Figuren 11 bis 13 zeigen das erzeugende und das erzeugte Schneckenprofil innerhalb eines achtförmigen Schneckengehäuses. Innerhalb der beiden Schneckenprofile befinden sich Zahlenwertangaben zu folgenden Schneckengrößen:
- RG: Radius der beiden Gehäusebohrungen
- RV: Virtueller Gehäuseradius, der kleiner gleich dem Gehäuseradius RG ist
- RA: Schneckenaußenradius der dicht kämmenden, selbstreinigenden Schneckenprofile
- RF: Schneckenaußenradius der zu fertigenden Schneckenprofile
- S: Spiel zwischen den beiden zu fertigenden Schneckenprofilen
- D: Spiel zwischen den zu fertigenden Schneckenprofilen und dem Gehäuse
- T: Steigung eines Förder-, Misch- oder Übergangselements
- VPR: Größe der Verschiebung der ebenen, dicht kämmenden, selbstreinigenden Schneckenprofile, falls diese exzentrisch angeordnet werden
- VPW: Winkel der Verschiebung (Richtungsangabe) der ebenen, dicht kämmenden, selbstreinigenden Schneckenprofile, falls diese exzentrisch angeordnet werden
- VLR: Größe der Verschiebung des zu fertigenden Schneckenprofils der linken Welle innerhalb der Spiele
- VLW: Winkel der Verschiebung des zu fertigenden Schneckenprofils der linken Welle innerhalb der Spiele
- VRR: Größe der Verschiebung des zu fertigenden Schneckenprofils der rechten Welle innerhalb der Spiele
- VRW: Winkel der Verschiebung des zu fertigenden Schneckenprofils der rechten Welle innerhalb der Spiele

Das Schneckengehäuse, welches sich aus zwei gegenseitig durchdringenden Bohrungen mit jeweils dem Radius RG und dem Abstand A = 1 ergibt, wird durch eine dünne, gestrichelte Linie dargestellt. Innerhalb der Durchdringung der beiden Gehäusebohrungen werden die beiden Bohrungen durch dünne, gepunktete Linien charakterisiert. Die Mittelpunkte der beiden Gehäusebohrungen sind identisch mit den beiden Drehpunkten der Schneckenprofile und sind jeweils durch einen kleinen Kreis gekennzeichnet. Die dicht kämmenden, selbstreinigenden Schneckenprofile werden durch eine dicke, durchgezogene Linie gekennzeichnet. Die Schneckenprofile in der Fertigung werden durch eine dünne, durchgezogene Linie dargestellt.

Dem Fachmann ist bekannt, dass zwischen dem Schneckenaußenradius RA des dicht kämmenden, selbstreinigenden Schneckenprofils, dem virtuellen Gehäuseradius RV, dem Spiel S zwischen den beiden zu fertigenden Schneckenprofilen und dem Spiel D zwischen den zu fertigenden Schneckenprofilen und dem Schneckengehäuse folgender Zusammenhang gilt: RA = RV - D + S/2.

Dem Fachmann ist ferner bekannt, dass zwischen dem Schneckenaußenradius RF des zu fertigenden Schneckenprofils, dem virtuellen Gehäuseradius RV und dem Spiel D zwischen den zu fertigenden Schneckenprofilen und dem Schneckengehäuse folgender Zusammenhang gilt: RF = RV - D.

Typischerweise ist der virtuelle Gehäuseradius RV gleich dem ausgeführten Gehäuseradius RG. Wird der virtuelle Gehäuseradius RV kleiner als der Gehäuseradius RG gewählt, so ergibt sich zwischen den Schneckenprofilen und dem Gehäuse ein zusätzliches Spiel. Dieses Spiel kann dazu genutzt werden, das erzeugende und das erzeugte Schneckenprofil unter Beibehaltung der Selbstreinigung exzentrisch zu verschieben. Die Exzentrizität ist durch Angabe der Größe der Verschiebung VPR und der Richtung der Verschiebung in Form eines Winkels VPW eindeutig charakterisiert.

**Figur 11****:** Die Figuren 11a bis 11c zeigen bevorzugte Ausführungsformen einer exzentrischen Positionierung der Schneckenprofile erfindungsgemäßer Schneckenelemente. Das Schneckenprofil in den Figuren 11a bis 11c basiert auf Figur 2a. Der virtuelle Gehäuseradius beträgt RV=0,54 und ist kleiner als der Gehäuseradius RG (RG=0,55). Die weiteren geometrischen Kenngrößen können den einzelnen Figuren entnommen werden. Die Schneckenprofile sind in den Figuren 11a bis 11b jeweils soweit verschoben worden, dass genau ein Punkt des rechten Schneckenprofils und kein Punkt des linken Schneckenprofils das Gehäuse berührt. Die Größe der dazu notwendigen Verschiebung hängt von der Richtung der Verschiebung ab. Einen Sonderfall zeigt die Figur 11c, bei dem die Schneckenprofile in Größe und Richtung so verschoben werden, dass beide Schneckenprofile in genau einem Punkt das Gehäuse berühren. Die Verschiebung erfolgt hier unter einem Winkel von π/4. Es können ferner exzentrische Positionierungen der Schneckenprofile gewählt werden, bei dem kein Punkt der Schneckenprofile das Gehäuse berührt.

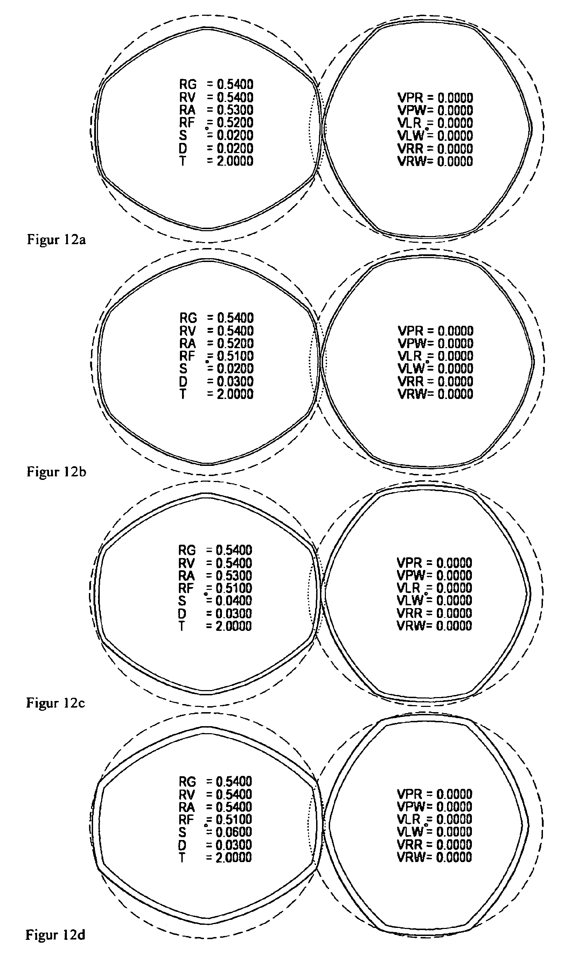

**Figur 12****:** Wie dem Fachmann bekannt ist, benötigen alle Schneckenelemente in der Praxis ein gewisses Spiel und zwar sowohl untereinander als auch gegenüber dem Gehäuse. Die Figuren 12a bis 12d zeigen verschiedene Spielstrategien. Die geometrischen Kenngrößen können den einzelnen Figuren entnommen werden. In Figur 12a wird eine Spielstrategie gezeigt, bei der das Spiel zwischen den zu fertigenden Schneckenprofilen und zwischen den zu fertigenden Schneckenprofilen und dem Gehäuse gleich groß ist. In Figur 12b wird eine Spielstrategie gezeigt, bei der das Spiel zwischen den zu fertigenden Schneckenprofilen kleiner ist als das Spiel zwischen den zu fertigenden Schneckenprofilen und dem Gehäuse. In Figur 12c wird eine Spielstrategie gezeigt, bei der das Spiel zwischen den zu fertigenden Schneckenprofilen größer ist als das Spiel zwischen den zu fertigenden Schneckenprofilen und dem Gehäuse. In Figur 12d wird eine weitere Ausführungsform nach Figur 12c mit besonders großen Spielen gezeigt. Typische, in der Praxis vorkommende Spiele liegen für das Spiel zwischen den zu fertigenden Schneckenprofilen im Bereich 0,002 bis 0,1. Typische, in der Praxis vorkommende Spiele liegen für das Spiel zwischen den zufertigenden Schneckenprofilen und dem Gehäuse im Bereich 0,002 bis 0,1. Typische, in der Praxis vorkommende Spiele sind über den Umfang des Schneckenprofils konstant. Es ist jedoch zulässig, sowohl das Spiel zwischen den zu fertigenden Schneckenprofilen als auch das Spiel zwischen den zu fertigenden Schneckenprofilen und dem Gehäuse über den Umfang der Schneckenprofile zu variieren.

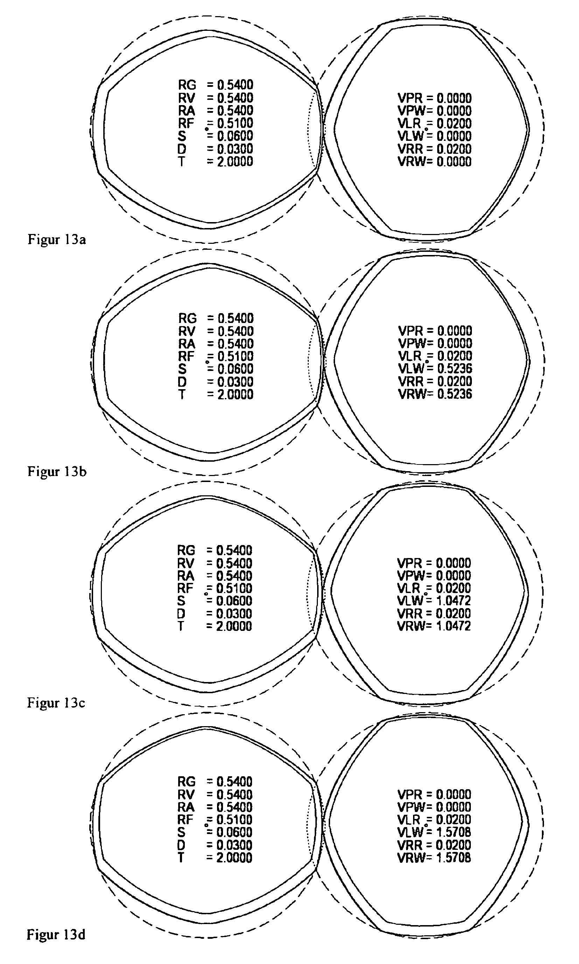

**Figur 13****:** Weiterhin ist es möglich, die zu fertigenden Schneckenprofile innerhalb der Spiele zu verschieben. Die Figuren 13a bis 13d zeigen eine Auswahl möglicher Verschiebungen. Die geometrischen Kenngrößen können den einzelnen Figuren entnommen werden. In den Figuren 13a bis 13d beträgt die Größe der Verschiebung für jeweils beide zu fertigenden Schneckenprofile VLR = VRR = 0,02. In den Figuren 13a bis 13d wird die Richtung der Verschiebung für jeweils beide zu fertigende Schneckenprofile zwischen VLW = VRW = 0 und VLW = VRW = π/2 schrittweise variiert. Es ist zulässig, die beiden zu fertigenden Schneckenprofile unabhängig voneinander in verschiedene Richtungen und um verschiedene Größen zu verschieben.

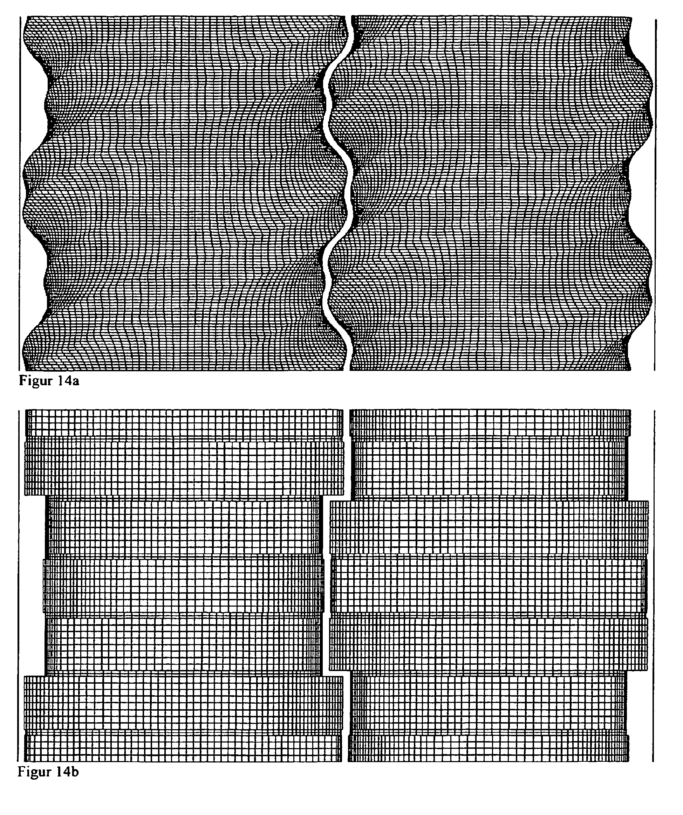

Die **Figur 14a** zeigt beispielhaft ein Paar von erfindungsgemäßen Schneckenelementen, ausgebildet als Förderelemente, deren Schneckenprofil auf Figur 2a basiert. Der Gehäuseradius beträgt RG = 0,54. Das Spiel zwischen den beiden Förderelementen beträgt S = 0,02. Das Spiel zwischen den beiden Förderelementen und dem Gehäuse beträgt D = 0,01. Die Steigung der Förderelemente beträgt T = 1,2. Die Länge der Förderelemente beträgt 1,2, was einer Drehung der Schneckenprofile um einen Winkel von 2π entspricht. Das Gehäuse wird durch dünne, durchgezogene Linien links und rechts der beiden Förderelemente dargestellt. Auf den Oberflächen der beiden Förderelemente ist ferner ein mögliches Rechengitter dargestellt, welches zur Berechnung der Strömung in Zwei-und Mehrwellenextrudern verwendet werden kann.

Die **Figur 14b** zeigt beispielhaft ein Paar von erfindungsgemäßen Schneckenelementen, ausgebildet als Knetelemente, deren Schneckenprofil auf Figur 2a basiert. Der Gehäuseradius beträgt RG = 0,54. Das Spiel zwischen den Knetscheiben der beiden Knetelemente beträgt S = 0,02. Das Spiel zwischen den Knetscheiben der beiden Knetelemente und dem Gehäuse beträgt D = 0,01. Das Knetelement besteht aus 7 Knetscheiben, die jeweils um einen Winkel von π/6 rechtsgängig zueinander versetzt sind. Die erste und die letzte Knetscheibe besitzen eine Länge von 0,09. Die mittleren Knetscheiben besitzen eine Länge von 0,18. Die Nut zwischen den Knetscheiben besitzt eine Länge von 0,02. Das Gehäuse wird durch dünne, durchgezogene Linien links und rechts der beiden Knetelemente dargestellt. Auf den Oberflächen der beiden Knetelemente ist ferner ein mögliches Rechengitter dargestellt, welches zur Berechnung der Strömung in Zwei- und Mehrwellenextrudern verwendet werden kann.

### Beispiele

Das Druckaufbauvermögen und der Leistungsbedarf von Schneckenelementen mit einem zweigängigen Erdmenger-Schneckenprofil nach dem Stand der Technik und von erfindungsgemäßen Schneckenelementen mit neuartigen Schneckenprofilen wurden mit Hilfe der Strömungssimulation berechnet.

Wie der Fachmann weiß und wie es in [1] auf den Seiten 129 bis 146 nachzulesen ist, kann das Betriebsverhalten von Schneckenelementen wie Förder-, Knet- und Mischelementen durch eine Druckdifferenz-Durchsatz- und durch eine Leistungs-Durchsatz-Charakteristik beschrieben werden. Um eine Übertragbarkeit auf unterschiedliche Extrudergrößen zu erleichtern, werden die Größen Druckdifferenz, Leistung und Durchsatz in ihrer dimensionslosen Form verwendet. Im Fall einer plastischen Masse mit Newtonschem Fließverhalten ergibt sich ein linearer Zusammenhang sowohl zwischen Druckdifferenz und Durchsatz als auch zwischen Leistung und Durchsatz. In der Druckdifferenz-Durchsatz-Charakteristik werden die Achsenschnittpunkte mit A1 und A2 gekennzeichnet ([1], Seite 133). Der Betriebspunkt A1 kennzeichnet den Eigendurchsatz eines Schneckenelements. Der Betriebspunkt A2 kennzeichnet das Druckaufbauvermögen ohne Durchsatz. In der Leistungs-Durchsatz-Charakteristik werden die Achsenschnittpunkte mit B1 und B2 gekennzeichnet ([1], Seite 136). Der Punkt B1 ist der sogenannte Turbinenpunkt. Ist der Durchsatz größer als B1, so wird Leistung an die Schneckenwellen abgegeben. Der Betriebspunkt B2 kennzeichnet den Leistungsbedarf ohne Durchsatz.

In einer Druckaufbauzone kann nur ein Teil der eingebrachten Leistung in Strömungsleistung überführt werden. Der Rest der eingebrachten Leistung dissipiert. Die Strömungsleistung berechnet sich als Produkt von Durchsatz und Druckdifferenz. Wie der Fachmann leicht erkennt, ist die Strömungsleistung an den Achsenschnittpunkten A1 und A2 jeweils gleich 0, da entweder die Druckdifferenz gleich 0 (A1) oder der Durchsatz gleich 0 (A2) ist. Im Bereich zwischen A1 und A2 sind sowohl die Druckdifferenz als auch der Durchsatz größer 0 und es ergibt sich eine positive Strömungsleistung. Dividiert man die Strömungsleistung eines Betriebspunkts gegeben durch einen Durchsatz durch die zu diesem Betriebspunkt von den Schneckenwellen abgegebene Leistung, so erhält man den Wirkungsgrad zum Druckaufbau an diesem Betriebspunkt. Durch Ableitung des Wirkungsgrads nach dem Durchsatz und anschließende Nullstellensuche lässt sich der maximale Wirkungsgrad eines Schneckenelements finden.

Die Strömung innerhalb eines Paars von Schneckenelementen wurde mit der kommerziell erhältlichen Software Fluent in der Version 6.3.26 durchgeführt. Eine Einführung zur Strömungssimulation von Zweiwellenschnecken findet sich zum Beispiel in [1, Seiten 147 - 168].

In der Strömungssimulation wurden jeweils Schneckenelemente untersucht, deren Länge gleich der halben Steigung ist. Diese Schneckenelemente wurden in der Strömungssimulation an ihrem axialen Anfang und ihrem axialen Ende mit periodischen Randbedingungen versehen, um einen hydrodynamisch eingelaufen Strömungszustand zu berechnen. Als plastische Masse wurde ein Fluid mit Newtonschem Fließverhalten verwendet.

### Beispiel 1: Förderelement mit zweigängigem Erdmenger-Schneckenprofil nach dem Stand der Technik.

Die Geometrie des Förderelements kann aus der Figur 1 und den Beschreibungen zur Figur 1 entnommen werden. Im Gegensatz zu den in den Figuren 1b und 1c gezeigten Rechengittern wird für die Strömungssimulation ein Rechengitter verwendet, das in jeder Richtung doppelt so viele Rechenzellen aufweist, also 320 Gitterelemente in Umfangsrichtung, 160 Gitterelemente in Axialrichtung und 12 Gitterelemente in Radialrichtung.

Die Achsenabschnitte wurden wie folgt berechnet: A =0,1365, A2=18917, B1=0,4273, B2=8084. Der maximale Wirkungsgrad beim Druckaufbau ergibt sich zu 9,59%.

### Beispiel 2: erfindungsgemäßes Förderelement mit neuartigem Schneckenprofil

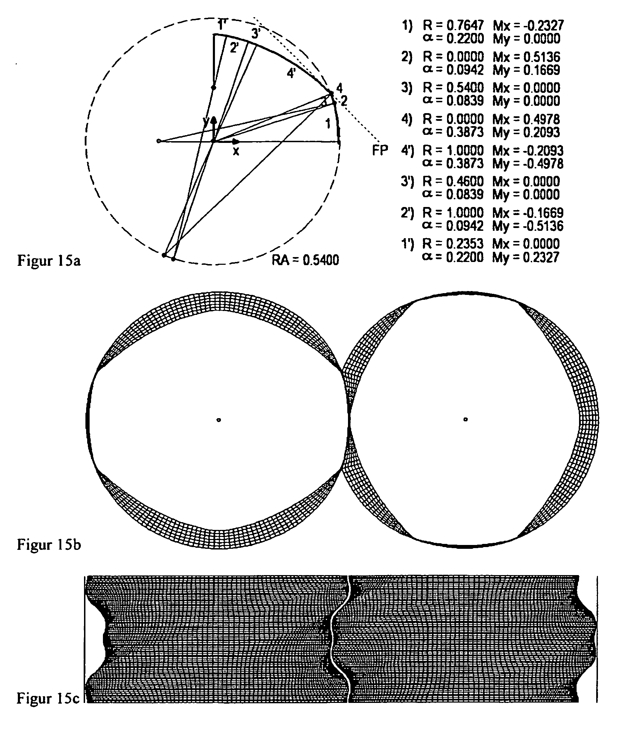

Die Geometrie des erfindungsgemäßen Förderelements geht aus Figur 15 hervor. Die Figur 15a zeigt ein Viertel eines bevorzugten Schneckenprofils eines erfindungsgemäßen Schneckenelements, welches aus 8 Kreisbögen aufgebaut ist. Der dimensionslose Schneckenaußenradius beträgt RA = 0,54. Der Radius R_1 ist gleich 0,7647. Der maximale dimensionslose Abstand des Kreisbogens 1 vom Schneckenaußenradius berechnet sich zu 0,008. Der Kammbereich ist durch den Kreisbogen 3 gegeben, der auf dem Schneckenaußenradius liegt. Der Kammwinkel α_3 ist gleich 0,0839. Der Nutbereich ist durch den Kreisbogen 3' gegeben, der auf dem Kernradius liegt. Der Nutwinkel α_3' ist gleich 0,0839. Die Summe der Kammwinkel aller Kammbereiche für ein Paar von erfindungsgemäßen Schneckenelementen beträgt 8*0,0839=0,6712 und damit nur etwa das 0,211-fache der Summe der Kammwinkel eines Paars von Schneckenelementen mit einem zweigängigen Erdmenger-Schneckenprofil.

Die Figur 15b zeigt ein Paar von Schneckenelementen, ausgebildet als Förderelemente, deren Schneckenprofil auf Figur 15a basiert. Das Spiel zwischen den beiden Förderelementen beträgt S = 0,008. Das Spiel zwischen den beiden Förderelementen und dem Gehäuse beträgt D = 0,004. Die Steigung der Förderelemente beträgt T = 1,08. Die Länge der Förderelemente beträgt 0,54, was einer Drehung der Schneckenprofile um einen Winkel von n entspricht. Das Gehäuse wird durch dünne, durchgezogene Linien links und rechts der beiden Förderelemente dargestellt. Auf den Oberflächen der beiden Förderelemente ist ferner ein mögliches Rechengitter dargestellt, welches zur Berechnung der Strömung in Zwei- und Mehrwellenextrudern verwendet werden kann. Die Anzahl der Gitterelemente in Umfangsrichtung ist gleich 160 und in Axialrichtung gleich 80.

Die Figur 15c zeigt eine Draufsicht auf das Paar von Schneckenelementen nach Figur 15b. Das freie Volumen zwischen den Förderelementen und dem Gehäuse ist mit einem möglichen Rechengitter versehen, welches zur Berechnung der Strömung in Zwei- und Mehrwellenextrudern verwendet werden kann. Die Anzahl der Gitterelemente in Umfangsrichtung ist gleich 160 und in Radialrichtung gleich 6. Die Drehachsen der beiden Schneckenelemente sind durch kleine Kreise markiert.

Im Gegensatz zu den in den Figuren 15b und 15c gezeigten Rechengittern wird für die Strömungssimulation ein Rechengitter verwendet, das in jeder Richtung doppelt so viele Rechenzellen aufweist, also 320 Gitterelemente in Umfangsrichtung, 160 Gitterelemente in Axialrichtung und 12 Gitterelemente in Radialrichtung.

Die Achsenabschnitte wurden wie folgt berechnet: A1=0,1324, A2=18721, B1=0,3436, B2=6434. Der maximale Wirkungsgrad beim Druckaufbau ergibt sich zu 12,11 %. Eigendurchsatz A 1 und Druckaufbauvermögen A2 stimmen bis auf etwa 1% oder 2% mit den Ergebnissen aus Beispiel 1 überein. Die Werte für den Turbinenpunkt B1 und den Leistungsbedarf B2 sind im Vergleich zu Beispiel 1 um etwa 20% kleiner. Daraus resultiert bei den erfindungsgemäßen Schneckenelementen im Vergleich zu den Schneckenelementen nach dem Stand der Technik eine Verbesserung des Wirkungsgrads zum Druckaufbau von etwa 26,2%.

Mit den erfindungsgemäßen Schneckenelementen werden Schneckenelemente bereitgestellt, die im Vergleich zu Schneckenelementen nach dem Stand der Technik einen höheren Wirkungsgrad aufweisen. Gleichzeitig weisen die erfindungsgemäßen Schneckenelemente durch ihren reduzierten Kammbereich eine niedrigere thermische Produktbeanspruchung auf als die mit Schneckenelementen nach dem Stand der Technik.

## Patentansprüche

1. Schneckenelemente für mehrwellige Schneckenmaschinen mit paarweise gleichsinnigen und paarweise exakt abschabenden Schneckenwellen, wobei
- die Summe aller Kammwinkel eines Paars von Schneckenelementen größer oder gleich 0 und kleiner als 2*π-8*arccos(0,5*a/ra) ist,
- die Anzahl der Kammbereiche eines Paars von Schneckenelementen größer als 4 ist, **dadurch gekennzeichnet, dass**
- jedes Schneckenelement eines Paars von Schneckenelementen zwei Schneckenprofilbereiche aufweist, die jeweils aus Flanken- und Nutbereichen bestehen und bei denen die Summe der Flanken- und Nutwinkel jeweils größer π/2 ist.

2. Schneckenelemente nach Anspruch 1, **dadurch gekennzeichnet, dass** einer oder mehrere Kammbereiche einen Kammwinkel von 0 besitzen.

3. Schneckenelemente nach einem der Ansprüche 1 oder 2, **dadurch gekennzeichnet, dass** das erzeugte Schneckenprofil nach einer Drehung um π/2 identisch ist mit dem erzeugenden Schneckenprofil.

4. Schneckenelemente nach einem der Ansprüche 1 oder 2, **dadurch gekennzeichnet, dass** das erzeugte Schneckenprofil nach einer Drehung um π/2 verschieden ist von dem erzeugenden Schneckenprofil.

5. Schneckenelemente nach einem der Ansprüche 1 bis 4, **dadurch gekennzeichnet, dass** ein erzeugendes und ein erzeugtes Schneckenprofil eine Abfolge von Kanalbereich - Schließbereich - Kanalbereich - Schließbereich aufweisen.

6. Schneckenelemente nach Anspruch 5, **dadurch gekennzeichnet, dass** der Schließwinkel von mindestens einem Schließbereich eines Schneckenprofils eines Paars von Schneckenelementen größer als der 1,2-fache Kammwinkel eines zweigängigen Erdmenger-Schneckenprofils ist.

7. Schneckenelemente nach einem der Ansprüche 1 bis 6, **dadurch gekennzeichnet, dass** der auf den Achsabstand normierte Schneckenaußenradius der Schneckenelemente im Bereich von 0,51 bis 0,66 liegt.

8. Schneckenelemente nach einem der Ansprüche 1 bis 7, **dadurch gekennzeichnet, dass** die Schneckenelemente als Förderelemente oder Mischelemente ausgebildet sind, indem die Schneckenprofile in Achsrichtung schraubenförmig fortgesetzt sind, oder als Knetelement ausgebildet sind, indem die Schneckenprofile in Achsrichtung abschnittsweise versetzt fortgesetzt sind.

9. Schneckenelemente, die von Schneckenelementen gemäß einem der Ansprüche 1 bis 8 abgeleitet sind und Spiele zwischen Schneckenelementen und Gehäuse und/oder zwischen benachbarten Schneckenelementen aufweisen.

10. Verwendung von Schneckenelementen nach einem der Ansprüche 1 bis 9 in einer Mehrwellenschneckenmaschine, bevorzugt in einer Zweiwellenschneckenmaschine.

11. Verfahren zur Extrusion plastischer Massen in einem Doppelschnecken- oder Mehrwellenextruder unter Verwendung von Schneckenelementen nach einem der Ansprüche 1 bis 9, **dadurch gekennzeichnet, dass**
- die Summe aller Kammwinkel eines Paars von Schneckenelementen größer oder gleich 0 und kleiner als 2*π-8*arccos(0,5*a/ra) ist,
- die Anzahl der Kammbereiche eines Paars von Schneckenelementen größer als 4 ist,
- jedes Schneckenelement eines Paars von Schneckenelementen zwei Schneckenprofilbereiche aufweist, die jeweils aus Flanken- und Nutbereichen bestehen und bei denen die Summe der Flanken- und Nutwinkel jeweils größer π/2 ist.

12. Verfahren nach Anspruch 11, **dadurch gekennzeichnet, dass** die plastischen Massen Thermoplaste oder Elastomere sind.

13. Verfahren nach Anspruch 12, **dadurch gekennzeichnet, dass** als Thermoplaste Polycarbonat, Polyamid, Polyester, insbesondere Polybutylenterephthalat und Polyethylenterephthalat, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere, Polyvinylchlorid oder ein Blend von mindestens zwei der genannten Thermoplaste eingesetzt wird.

14. Verfahren nach Anspruch 12, **dadurch gekennzeichnet, dass** als Elastomere Styrol-Butadien-Kautschuk, Naturkautschuk, Butadien-Kautschuk, Isopren-Kautschuk, Ethylen-Propylen-Dien-Kautschuk, Ethylen-Propylen-Kautschuk, Butadien-Acrylnitril-Kautschuk, hydrierter Nitrilkautschuk, Butylkautschuk, Halobutylkautschuk, Chloropren-Kautschuk, Ethylen-Vinylacetat-Kautschuk, Polyurethan-Kautschuk, Thermoplastisches Polyurethan, Guttapercha, Arylatkautschuk, Fluorkautschuk, Siliconkautschuk, Sulfidkautschuk, Chlorsulfonyl-Polyäthylen-Kautschuk oder eine Kombination von mindestens zwei der genannten Elastomere eingesetzt wird.

15. Verfahren nach einem der Ansprüche 11 bis 14, **dadurch gekennzeichnet, dass** den plastischen Massen Füll- oder Verstärkungsstoffe oder Polymeradditive oder organische oder anorganische Pigmente oder Mischungen davon zugesetzt werden.

## Claims

1. Screw elements for multi-screw extruders with screws co-rotating in pairs and being fully self-wiping in pairs, wherein
- the sum of all the tip angles of a pair of screw elements is greater than or equal to 0 and less than 2*π-8*arccos(0.5*a/ra),
- the number of tip zones of a pair of screw elements is greater than 4, **characterized in that**
- each screw element of a pair of screw elements comprises two screw profile zones, which consist in each case of flank zones and grooved zones and in which the sum of the flank and groove angles is in each case greater than π/2.

2. Screw elements according to Claim 1, **characterized in that** one or more tip zones have a tip angle of 0.

3. Screw elements according to one of Claims 1 or 2, **characterized in that**, after a rotation of π/2, the generated screw profile is identical to the generating screw profile.

4. Screw elements according to one of Claims 1 or 2, **characterized in that**, after a rotation of π/2, the generated screw profile is different from the generating screw profile.

5. Screw elements according to one of Claims 1 to 4, **characterized in that** a generating and a generated screw profile display a sequence of channel zone - closing zone - channel zone - closing zone.

6. Screw elements according to Claim 5, **characterized in that** the closing angle of at least one closing zone of a screw profile of a pair of screw elements is greater than the 1.2 times the tip angle of a double-flighted Erdmenger screw profile.

7. Screw elements according to one of Claims 1 to 6, **characterized in that** the outer screw radius of the screw elements normalized to the centreline distance lies in the range from 0.51 to 0.66.

8. Screw elements according to one of Claims 1 to 7, **characterized in that** the screw elements are configured as conveying elements or mixing elements by extending the screw profiles helically in the axial direction, or as kneading elements by extending the screw profiles in portions in an offset manner in the axial direction.

9. Screw elements, which are derived from screw elements according to one of Claims 1 to 8 and display clearances between screw elements and barrel and/or between neighbouring screw elements.

10. Use of screw elements according to one of Claims 1 to 9 in a multi-screw extruder, preferably in a twin-screw extruder.

11. Process for extruding plastic compositions in a twin-screw or multi-screw extruder using screw elements according to one of Claims 1 to 9, **characterized in that**
- the sum of all the tip angles of a pair of screw elements is greater than or equal to 0 and less than 2*π-8*arccos(0.5*a/ra),
- the number of tip zones of a pair of screw elements is greater than 4,
- each screw element of a pair of screw elements comprises two screw profile zones, which consist in each case of flank zones and grooved zones and in which the sum of the flank and groove angles is in each case greater than π/2.

12. Process according to Claim 11, **characterized in that** the plastic compositions are thermoplastics or elastomers.

13. Process according to Claim 12, **characterized in that** the thermoplastics used are polycarbonate, polyamide, polyester, in particular polybutylene terephthalate and polyethylene terephthalate, polyether, thermoplastic polyurethane, polyacetal, fluoropolymer, in particular polyvinylidene fluoride, polyether sulfones, polyolefin, in particular polyethylene and polypropylene, polyimide, polyacrylate, in particular poly(methyl)methacrylate, polyphenylene oxide, polyphenylene sulfide, polyether ketone, polyarylether ketone, styrene polymers, in particular polystyrene, styrene copolymers, in particular styrene-acrylonitrile copolymer, acrylonitrile-butadienestyrene block copolymers, polyvinyl chloride or a blend of at least two of the stated thermoplastics.

14. Process according to Claim 12, **characterized in that** the elastomers used are styrenebutadiene rubber, natural rubber, butadiene rubber, isoprene rubber, ethylene-propylene-diene rubber, ethylene-propylene rubber, butadiene-acrylonitrile rubber, hydrogenated nitrile rubber, butyl rubber, halobutyl rubber, chloroprene rubber, ethylene-vinyl acetate rubber, polyurethane rubber, thermoplastic polyurethane, gutta percha, acrylate rubber, fluororubber, silicone rubber, sulfide rubber, chlorosulfonyl-polyethylene rubber or a combination of at least two of the stated elastomers.

15. Process according to any one of Claims 11 to 14, **characterized in that** filler or reinforcing materials or polymer additives or organic or inorganic pigments or mixtures thereof are added to the plastics compositions.

## Revendications

1. Eléments de vis pour machines à vis à plusieurs arbres, présentant des arbres de vis tournant par paire dans le même sens et raclant par paire exactement,
- la somme de tous les angles d'engrenage d'une paire d'éléments de vis étant supérieure ou égale à 0 ou inférieure à 2*π-8*arccos(0,5*a/ra),
- le nombre de zones d'engrenage d'une paire d'éléments de vis étant supérieur à 4,
**caractérisés en ce que**
- chaque élément de vis d'une paire d'éléments de vis présente deux zones de profil de vis, qui sont à chaque fois constituées par des zones de bord et des zones de rainure et pour lesquelles la somme de l'angle de bord et de l'angle de rainure est à chaque fois supérieure à π/2.

2. Eléments de vis selon la revendication 1, **caractérisés en ce qu'**une ou plusieurs zones d'engrenage présentent un angle d'engrenage valant 0.

3. Eléments de vis selon l'une quelconque des revendications 1 ou 2, **caractérisés en ce que** le profil de vis qui est produit après une rotation de π/2 est identique au profil de vis qui produit.

4. Eléments de vis selon l'une quelconque des revendications 1 ou 2, **caractérisés en ce que** le profil de vis qui est produit après une rotation de π/2 est différent du profil de vis qui produit.

5. Eléments de vis selon l'une quelconque des revendications 1 à 4, **caractérisés en ce qu'**un profil de vis qui produit et un profil des vis qui est produit présentent une succession de zone de canal - zone de fermeture - zone de canal - zone de fermeture.

6. Eléments de vis selon la revendication 5, **caractérisés en ce que** l'angle de fermeture d'au moins une zone de fermeture d'un profil de vis d'une paire d'éléments de vis est supérieur à 1,2 fois l'angle d'engrenage d'un profil de vis à deux filets Erdmenger.

7. Eléments de vis selon l'une quelconque des revendications 1 à 6, **caractérisés en ce que** le rayon extérieur de la vis normalisé par rapport à la distance de l'axe des éléments de vis se situe dans la plage de 0,51 à 0,66.

8. Eléments de vis selon l'une quelconque des revendications 1 à 7, **caractérisés en ce que** les éléments à vis sont réalisés sous forme d'éléments de transport ou de mélange **en ce que** les profils de vis sont prolongés en forme de vis dans le sens des axes ou sont réalisés sous forme d'élément de malaxage **en ce que** les profils de vis sont prolongés dans le sens des axes avec un décalage par zone.

9. Eléments de vis qui sont dérivés des éléments de vis selon l'une quelconque des revendications 1 à 8 et qui présentent, entre les éléments de vis et le châssis et/ou entre des éléments de vis adjacents, des jeux.

10. Utilisation d'éléments de vis selon l'une quelconque des revendications 1 à 9 dans une machine à vis à plusieurs arbres, de préférence dans une machine à vis à deux arbres.

11. Procédé d'extrusion de masses plastiques dans une extrudeuse à double vis ou à arbres multiples en utilisant des éléments de vis selon l'une quelconque des revendications 1 à 9, **caractérisé en ce que**
- la somme de tous les angles d'engrenage d'une paire d'éléments de vis est supérieure ou égale à 0 et inférieure à 2*π-8*arccos(0,5*a/ra),
- le nombre de zones d'engrenage d'une paire d'éléments de vis est supérieur à 4,
- chaque élément de vis d'une paire d'éléments de vis présente deux zones de profil de vis, qui sont à chaque fois constituées par des zones de bord et des zones de rainure et pour lesquelles la somme de l'angle de bord et de l'angle de rainure est à chaque fois supérieure à π/2.

12. Procédé selon la revendication 11, **caractérisé en ce que** les masses plastiques sont des thermoplastiques ou des élastomères.

13. Procédé selon la revendication 12, **caractérisé en ce qu'**on utilise comme thermoplastiques un polycarbonate, un polyamide, un polyester, en particulier le poly(téréphtalate de butylène) et le poly(téréphtalate d'éthylène), un polyéther, un polyuréthane thermoplastique, un polyacétal, un polymère fluoré, en particulier le poly(fluorure de vinylidène), un polyéthersulfone, une polyoléfine, en particulier le polyéthylène et le polypropylène, un polyimide, un polyacrylate, en particulier le polyméthacrylate (de méthyle), un poly(oxyde de phénylène), un poly(sulfure de phénylène), une polyéthercétone, une polyaryléthercétone, des polymères de styrène, en particulier le polystyrène, des copolymères de styrène, en particulier un copolymère de styrène-acrylonitrile, des copolymères à blocs d'acrylonitrile-butadiène-styrène, le poly(chlorure de vinyle) ou un mélange d'au moins deux des thermoplastiques mentionnés.

14. Procédé selon la revendication 12, **caractérisé en ce qu'**on utilise comme élastomères un caoutchouc de styrène-butadiène, un caoutchouc naturel, un caoutchouc de butadiène, un caoutchouc d'isoprène, un caoutchouc d'éthylène-propylène-diène, un caoutchouc d'éthylène-propylène, un caoutchouc de butadiène-acrylonitrile, un caoutchouc de nitrile hydrogéné, un caoutchouc de butyle, un caoutchouc d'halogénobutyle, un caoutchouc de chloroprène, un caoutchouc d'éthylène-acétate de vinyle, un caoutchouc de polyuréthane, un polyuréthane thermoplastique, le gutta-percha, un caoutchouc d'arylate, un caoutchouc fluoré, un caoutchouc de silicone, un caoutchouc de sulfure, un caoutchouc de chlorosulfonyl-polyéthylène ou une combinaison d'au moins deux des élastomères mentionnés.

15. Procédé selon l'une quelconque des revendications 11 à 14, **caractérisé en ce que** les masses plastiques sont additionnées de charges ou de substances de renforcement ou d'additifs pour polymères ou de pigments organiques ou inorganiques ou de mélanges de ceux-ci.
